Europäisches Patentamt

European Patent Office

Office européen des brevets

(11) Veröffentlichungsnummer: **0 347 917 B1**

# (12) EUROPÄISCHE PATENTSCHRIFT

(45) Veröffentlichungstag der Patentschrift: **29.12.93**

(51) Int. Cl.⁵: **G02C 7/02**

(21) Anmeldenummer: **89111396.1**

(22) Anmeldetag: **22.06.89**

Die Akte enthält technische Angaben, die nach dem Eingang der Anmeldung eingereicht wurden und die nicht in dieser Patentschrift enthalten sind.

(54) **Brillenglas mit einem sich änderndem Brechungsindex.**

(30) Priorität: **22.06.88 DE 3821079**
**21.01.89 DE 3901775**

(43) Veröffentlichungstag der Anmeldung:
**27.12.89 Patentblatt 89/52**

(45) Bekanntmachung des Hinweises auf die Patenterteilung:
**29.12.93 Patentblatt 93/52**

(84) Benannte Vertragsstaaten:
**AT BE CH DE ES FR GB GR IT LI LU NL SE**

(56) Entgegenhaltungen:
EP-A- 0 101 972          EP-A- 0 132 955
WO-A-86/01308          DE-A- 2 707 601
GB-A- 2 191 017          US-A- 3 910 691

W.N. CHARMAN : "Gradient Index Optics", The Ophthalmic Optician 1981, pp. 72-84

(73) Patentinhaber: **Optische Werke G. Rodenstock**
**Isartalstrasse 43**
**D-80469 München(DE)**

(72) Erfinder: **Guilino, Günther**
**Kriegelsteinerstrasse 3**
**D-8000 München 70(DE)**
Erfinder: **Altheimer, Helmut**
**Dreimühlenstrasse 5**
**D-8000 München 5(DE)**
Erfinder: **Pfeiffer, Herbert**
**Georg-Hann-Strasse 16**
**D-8000 München 60(DE)**

(74) Vertreter: **Münich, Wilhelm, Dr.**
**Kanzlei Münich, Steinmann, Schiller**
**Wilhelm-Mayr-Str. 11**
**D-80689 München (DE)**

## Beschreibung

## Technisches Gebiet

Die Erfindung bezieht sich auf ein Brillenglas mit zwei Begrenzungsflächen und mit einem sich ändernden Brechungsindex (Brechzahl), der zur Korrektur der Abbildungsfehler beiträgt.

## Stand der Technik

Brillengläser mit einem sich ändernden Brechungsindex sind in der Literatur mehrfach diskutiert worden. Hierzu wird beispielsweise auf den Übersichtsartikel "Gradient Index Optics" von W.N. Charman (The Ophthalmic Optician, 1981, S. 73-84) sowie die dort angegebene Literatur oder auf die DE-OS 27 07 601 verwiesen.

Während in dieser Literatur im wesentlichen der Ersatz von asphärischen Flächen durch einen "Indexgradienten" oder die zusätzliche Verbesserung der Abbildungseigenschaften bei Brillengläsern mit asphärischen Flächen durch einen Indexgradienten diskutiert wird, ist in der DE-OS 36 16 888 erstmals vorgeschlagen worden, durch die Verwendung eines sich ändernden Brechungsindizes die kritische Dicke, wesentlich stärker zu verringern, als dies allein durch die Verwendung von asphärischen Flächen möglich ist. (Die kritische Dicke ist die Mittendicke bei Brillengläsern mit positiver Wirkung bzw. die Randdicke bei Brillengläsern mit negativer Wirkung.)

Auf diese Druckschrift wird im übrigen hinsichtlich aller hier nicht näher erläuterter Begriffe sowie des Berechnungs-und Optimierungsverfahrens ausdrücklich verwiesen.

In der DE-OS 36 16 888 sind allgemein sich zur optischen Achse rotationssymmetrisch ändernde Brechungsindizes in Betracht gezogen. Der bei den Ausführungsbeispielen der DE-OS 36 16 888 im besonderen verwendete Gradient mit radialer Abhängigkeit ist jedoch vergleichsweise aufwendig, beispielsweise durch "Verdrillen" und anschließende Wärmebehandlung von konzentrischen Zylindern bzw. Hohlzylindern mit unterschiedlichem Brechungsindex, herstellbar.

Andererseits können Brechungsindex-Variationen vergleichsweise einfach mittels eines Ionen-Austauscherbades hergestellt werden, in das ein Glas- bzw. Kunststoffblock getaucht wird. Der Ionen-Austausch in dem Bad führt zum Aufbau eines sogenannten "oberflächennormalen" Gradienten. Ein zu den Begrenzungsflächen eines Brillenglases "normaler", d.h. senkrechter, Gradient hat jedoch - wie erfindungsgemäß erkannt worden ist - nur eine geringe optische Wirksamkeit. Zwar lassen sich auch Brechungsindex-Gradienten mit radialem Verlauf theoretisch durch "Ionen-Austausch" über die zylindrische Oberfläche eines sehr langen Glaszylinders herstellen, in der Praxis ist dies aber bei Brillengläsern wegen der in der Regel sehr geringen Eindringtiefe der Ionen-Austauschwirkung nur bei wenigen Glassorten möglich.

## Beschreibung der Erfindung

Der Erfindung liegt die Aufgabe zugrunde, ein Brillenglas mit einem sich ändernden Brechungsindex, dessen Verlauf der jeweiligen Problemstellung angepaßt ist, sowie ein Verfahren zu dessen Herstellung anzugeben, das eine flexible Anpassung der sich durch das für die Erzeugung des Indexgradienten gewählten Verfahrens ergebenden Variation des Brechungsindex (Brechzahl) an die jeweilige optische Problemstellung und insbesondere die Korrekturaufgabe ermöglicht.

Eine erfindungsgemäße Lösung dieser Aufgabe ist mit ihren Weiterbildungen in den Patentansprüchen gekennzeichnet.

Die Erfindung geht zur Lösung dieser Aufgabe von folgendem Grundgedanken aus:

Erfindungsgemäß ist erkannt worden, daß ein zu einer Oberfläche, d.h. der Vorderfläche oder der augenseitigen Fläche des "fertigen" Brillenglases normaler Gradient, also z.B. ein Gradientenverlauf, wie sich bei einem Ionenaustausch-Verfahren ergibt, bei den für diese Verfahren charakteristischen Eindringtiefen nur einen geringen Einfluß auf die Korrektur der Abbildungsfehler hat.

Insbesondere ist es nicht möglich, bei einem Brillenglas, dessen stärker gekrümmte Fläche ohne Rücksicht auf die Korrektur der Abbildungsfehler gewählt worden ist, - wie dies beispielsweise in der DE-OS 36 16 888 vorgeschlagen worden ist - die Abbildungsfehler durch einen Gradienten zu korrigieren, der senkrecht zu der augenseitigen Fläche und/oder der Vorderfläche des Brillenglases verläuft.

Dagegen erlaubt ein Gradient gemäß dem kennzeichnenden Teil des Anspruchs 1, d.h. eine Brechungsindex-Variation, die sowohl von der Koordinate z in Richtung der Verbindungsachse der Glasscheitel als auch von den Koordinaten x,y senkrecht zur Verbindungsachse abhängt, in sehr einfacher Weise die Korrektur der Abbildungsfehler und die Minimierung der kritischen Dicke. Erfindungsgemäß zeichnet sich das Brillenglas deshalb durch wenigstens eine Schar von in Blickrichtung aufeinanderfolgenden Niveauflächen, die jeweils durch einen konstanten Brechungsindex, $n(x,y,z) = const.$, definiert sind, wobei sich der Brechungsindex benachbarter Flächen voneinander unterscheidet und diese Niveauflächen in Richtung ihrer Flächennormalen in allen Punkten jeweils gleichen Abstand zueinander haben, also sogenannte Parallelflächen sind, und die bzw. deren analytische Verlängerung die Achse (z), die die Glasscheitel ($S_1, S_2$) der Vorderfläche (1) und der augenseitigen Fläche (2) verbindet, in einem Abstand A von dem nächstgelegenen Glasscheitel schneiden, für den gilt:

$$A \leq 20 * L_{n(x,y,z)=const.}$$

hierbei ist $L_{n(x,y,z)=const.}$ die Länge der Grenzlinie (3',4') in einem Linsenschnitt zwischen dem Gebiet mit im wesentlichen konstanten Brechungsindex und dem Gebiet mit sich änderndem Brechungsindex.

Dabei wird unter analytischer Fortsetzung eine "Verlängerung" der Niveauflächen unter Zugrundelegung des salben Bildungsgesetzes verstanden, das die Niveauflächen im Brillenglas beschreibt.

Das Einhalten diesar Bedingung stellt sicher, daß die Niveauscharen ein Lage relativ zu den Begrenzungsflächen unter Berücksichtigung ihrer Eindringtiefe haben, daß die Änderung des Brechungsindex eine ausreichende "optische Wirkung" hat.

Hierbei ergeben sich die folgenden Fallunterscheidungen:

1. Die Reduktion der kritischen Dicke bzw. der Scheiteltiefe erfolgt dadurch, daß die beiden Flächen und insbesondere die stärker gekrümmte Fläche deutlich abweichend von der Tscherning'schen Regel durchgebogen sind (Anspruch 13) und/oder als rotationssymmetrische asphärische Fläche (Anspruch 15) mit nach außen "abnehmender Krümmung" ausgebildet wird. Für den Minusbereich ist die asphärische Fläche die Rückfläche (augenseitige Fläche), für den Plusbereich dagegen die Vorderfläche (Ansprüche 18 bzw. 19).

Die Korrektur der Abbildungsfehler erfolgt dann gemäß den Ansprüchen 10 bzw. 8 dadurch, daß die Niveauflächen mit konstantem Brechungsindex die Verbindungsachse außerhalb der beiden Scheitel des Brillenglases durchsetzen, d.h. daß das Material um und entlang der optischen Achse einen konstanten Brechungsindex hat (i.f. auch als homogen bezeichnet).

2. Die Reduktion der kritischen Dicke bzw. der Scheiteltiefe erfolgt durch einen Indexgradienten "zwischen den Glasscheiteln". Damit ist gemeint, daß die Niveauflächen mit konstantem Brechungsindex die Verbindungsachse "zwischen den Glasscheiteln" schneiden (Anspruch 14). Der Gradient ist dabei so orientiert, daß auf der Brillenglasseite, die die stärker gekrümmte Fläche aufweist, der Brechungsindex seinen höchsten Wert erreicht (Anspruch 17).

3. Selbstverständlich ist es möglich, daß sowohl die Indexvariation als auch die Gestaltung der stärker gekrümmten Fläche und insbesondere deren asphärische Ausbildung zur Reduktion der kritischen Dicke und/oder zur Korrektion der peripheren Abbildungsfehler beitragen.

Diese Lösungsmöglichkeit mit einer als asphärische Fläche ausgebildeten Rückfläche ergibt Minusgläser mit wesentlich geringerer Randdicke und sehr viel besserer Korrektur als bei herkömlichen Minusgläsern.

Derartige Niveauflächen mit konstantem Brechungsindex lassen sich beispielsweise dadurch herstellen, daß zunächst ein Rohling hergestellt wird, dessen eine oder dessen beide Flächen Parallelflächen zu der bzw. den Flächenscharen mit konstantem Brechungsindex sind. Senkrecht zu dieser Fläche bzw. den beiden Flächen wird dann mit bekannten Verfahren, beispielsweise durch Ionen-Austausch (Anspruch 25) die Variation des Brechungsindex erzeugt. Deshalb wird die Fläche des Rohlings bzw. die beiden Flächen des Rohlings, die einem Ionen-Austausch unterzogen wird, auch als Gradienten-erzeugende Fläche bezeichnet.

Nachdem die Brechungsindex-Variation erzeugt worden ist, werden die eigentlichen Begrenzungsflächen des Brillenglases hergestellt.

Damit ist es aber auch möglich, zwei oder mehr unterschiedliche Scharen von Niveauflächen zu verwenden, von denen beispielsweise eine Schar die Verbindungsachse (im wesentlichen) zwischen den Flächenscheiteln und die andere Schar die Verbindungsachse augenseitig vom hinteren Flächenscheitel schneidet. Die eine Schar von Niveauflächen wird dann so gewählt, daß die Scheiteltiefe bzw. die kritische Dicke um das gewünschte Maß verringert wird, während die andere Schar von Niveauflächen entsprechend der erforderlichen Korrektur von Abbildungsfehlern gewählt wird. Für den Fall, daß sich die beiden Niveauflächen-Scharen überlappen, ergeben sich im Überlappungsgebiet entsprechende "Mischbereiche".

Auch können drei oder mehr Scharen von Niveauflächen verwendet werden, die beispielsweise durch wiederholte Diffusionsvorgänge, zwischen denen jeweils die Gradientenerzeugende Fläche geändert wird, hergestellt werden. Dabei ist es natürlich möglich, zwischen den einzelnen Herstellschritten die Gradienten-

EP 0 347 917 B1

erzeugenden Flächen derart zu bearbeiten, daß für unterschiedliche, auf die gleiche Seite des Glases wirkende Herstellschritte, Gradientenerzeugende Flächen mit unterschiedlicher Flächengestaltung verwendet werdn. Bevorzugt ist es jedoch, wenn - sofern zwischen den einzelnen Herstellschritten eine Bearbeitung der Gradienten-erzeugenden Flächen erfolgt, diese so bearbeitet werden, daß die auf jeweils einer Seite des Glases verwendeten Gradienten-erzeugenden Flächen ebenfalls Parallel-Flächen zueinander sind.

Selbstverständlich ist es auch möglich, daß zur Herstellung des Gradienten lediglich unterschiedliche Verfahren, beispielsweise nacheinander unterschiedliche Ionen-Austauschbäder verwendet werden, und die Gradienten-erzeugende Fläche immer gleich bleibt.

Ausdrücklich soll darauf hingewiesen werden, daß im allgemeinen, im Anspruch 1 angegebenen Fall die Flächengestaltung der Niveauflächen beliebig sein kann, da sie lediglich von der Flächengestaltung der Gradienten-erzeugenden Fläche(n) abhängt. Insbesondere kann die Gradienten-erzeugende Fläche einen nicht monotonen Krümmungsverlauf, wie er beispielsweise bei Brillengläsern mit Tragrand verwirklicht ist, oder einen Verlauf ähnlich einer progressiven Fläche (Anspruch 4) etc. haben.

Hierdurch ist die größtmögliche Freiheit bei der Gestaltung der Niveaufläche(n) des Brechungsindex-Gradienten gewährleistet, da die Form der Niveauflächen ein "direktes Abbild" der Gradienten-erzeugenden Fläche(n) ist: Beispielsweise können Niveauflächen mit der Form von Zylinderflächen, Sattelflächen und/oder allgemein atorischen Flächen (Anspruch 3) mittels entsprechend ausgebildeten Gradienten-erzeugenden Flächen hergestellt werden. Damit ist es möglich, Brillengläser mit astigmatischer Wirkung herzustellen, deren Vorderfläche und deren augenseitige Fläche eine rotationssymmetrische Form haben, so daß (beispielsweise) keine Randdickenvariation trotz der astigmatischen Wirkung auftritt.

Da die Form, d.h. die Flächengestaltung der Parallelflächen, auf denen jeweils der Brechungsindex konstant ist, nicht mehr vom gewählten Herstellverfahren für den Indexgradienten limitiert wird, können beispielsweise die Abbildungsfehler sowohl bei Einstärkengläsern als auch bei Mehrstärkengläser, d.h. Zwei- oder Dreistärkengläser, astigmatischen Gläsern oder Progressivgläsern optimal entsprechend der jeweiligen Vorgabe korrigiert werden.

Besonders vorteilhaft insbesondere hinsichtlich der Herstellung der Gradienten-erzeugenden Flächen ist jedoch die Verwendung von rotationssymmetrischen Flächen, die im Meridianschnitt eine gemeinsame Evolute, deren axialer Ausgangspunkt bevorzugt im Objektraum liegt, bzw. ein gemeinsames Symmetriezentrum haben (Anspruch 5).

Die rotationssymmetrischen Gradienten-erzeugenden Flächen können nicht nur asphärische Flächen, sondern insbesondere sphärische Flächen (Anspruch 6) oder sogar Ebenen (Anspruch 7) sein. Die Verwendung von ebenen Flächen als Gradienten-erzeugende Flächen hat den Vorteil, daß zur Herstellung eines erfindungsgemäßen Brillenglases gegenüber der Herstellung herkömlicher Brillengläser keine zusätzlichen Bearbeitungsschritte erforderlich sind.

Der erfindungsgemäße Brechungsindex-Gradient, der durch wenigstens eine Schar von Niveauflächen mit konstantem Brechungsindex gebildet wird, hat zusätzlich zu den vorgenannten Eigenschaften eine Reihe weiterer sehr vorteilhaften Eigenschaften:
Wenn die beiden Flächen eines üblichen Brillenglases so gewählt werden, daß sich eine geringe kritische Dicke ergibt, d.h. das Brillenglas unter kosmetischen Gesichtspunkten ansprechend ist, sind im allgemeinen die Abbildungseigenschaften des Brillenglases nicht akzeptabel. So übersteigen bereits bei geringer Wirkung (Korrektionswert) des Brillenglases der Refraktionsfehler und der astigmatische Fehler selbst bei vergleichsweise kleinen Blickwinkeln von ca. 25° Werte von 1 dpt.

Zur Korrektur der sich bei einem derartigen Brillenglas ergebenden Abbildungsfehler (Refraktionsfehler und Astigmatismus) von typischerweise bis zu mehreren Dioptrien werden lediglich Brechungsindex-Variationen benötigt, bei denen der Brechungsindex über einen Bereich von wenigen mm um typischerweise 0,1 bis 0,3 Einheiten variiert, also beispielsweise bei einem Minusglas von 1,5 auf 1,7 zunimmt. Selbstverständlich ist es aber auch möglich, daß der Schnittbereich der Niveauflachen geringer als die Scheiteltiefe ist, so daß die "Korrekturwirkung" erst in einem bestimmten Abstand von der optischen Achse "einsetzt" (Anspruch 15) oder bei einem bestimmten Abstand "aufhört", so daß die Brechzahl von diesem Abstand an konstant ist und der Randbereich des Glases als "optisch nicht korrigierter Tragrand" ausgebildet ist (Anspruch 16), d.h. beispielsweise eine Krümmungsumkehr aufweisen kann. Von besonderem Vorteil ist ferner, daß die Variationsbreite in der Größenordnung von einigen mm gerade die sich typischerweise bei Ionen-Austauschverfahren ergebende Eindringtiefe ist.

Gemäß Anspruch 12 muß der Brechungsindex bildseitig (zum Auge hin) zur Korrektur eines positiven Astigmatismuswertes (meridionaler Brechwert - sagittaler Brechwert) und/oder eines positiven Refraktionsfehlers zunehmen bzw. zur Korrektur eines negativen Astigmatismuswertes bzw. Refraktionsfehlers abnehmen.

4

Durch die Verwendung einer Schar von Niveauflächen, die die Verbindungsachse "hinter dem augenseitigen Flächenscheitel" schneiden, können nahezu beliebige Korrekturbedingungen eingehalten werden. Beispielsweise ist es möglich, den Astigmatismus über einen großen Blickwinkelbereich praktisch auf Null zu halten. Ferner ist es auch möglich, ein unter physiologisch-optischen Gesichtspunkten optimales Verhältnis zwischen der Größe des Astigmatismus und des Refraktionsfehlers einzuhalten. Beispielsweise ergibt sich ein hoher Visus, wenn die Absolutwerte dieser beiden Größen das Verhältnis 1:2 annehmen.

Da die Berechnung der Variation des Brechungsindex bei vorgegebenem Flächenverlauf bzw. die Auswahl einer augenseitigen Fläche bei einem durch das Herstellverfahren und die gewählte "Gradientenerzeugende Fläche" vorgegebenen Verlauf der Indexänderung einen auf dem einschlägigen Gebiet tätigen Fachmann durch die vorstehende Lehre ohne weiteres möglich ist, soll auf eine genaue Beschreibung an dieser Stelle verzichtet werden.

In jedem Falle ist es von besonderem Vorteil, daß bei den üblicherweise verwendeten "konkaven" augenseitigen Flächen und bei der durch die im Anspruch 10 bzw. 8 angegebenen Ausbildung der einzelnen Niveauflächen die Dicke der Schicht, in der sich der Brechungsindex ändert, zum Rand hin zunimmt; dies bedeutet, daß auch die durch die Variation des Brechungsindex erzielten Wirkungen zum Rand hin zunehmen, andererseits werden auch die Abbildungsfehler, die durch den Brechungsindex-Gradienten korrigiert werden sollen, zum Rand hin größer, so daß sich ein synergetischer Effekt der Wirkung des Brechungsindexgradienten und der zu korrigierenden Größen ergibt !

Überraschend ist weiterhin folgende Eigenschaft des erfindungsgemäß ausgebildeten Gradienten:

Unter wirtschaftlichen Gesichtspunkten ist es nicht vertretbar, für jede spezielle Wirkung ein gesondertes Brillenglas herstellen zu müssen, bei dem der Brechungsindex mit einem speziell auf den jeweiligen Korrektionswert "zugeschnittenem Profil" variiert.

Für eine ökonomische Fertigung ist es vielmehr erforderlich, einen bestimmten Wirkungsbereich mit sog. Basiskurven abzudecken. Dies bedeutet, daß zunächst halbfertige Brillengläser (Blanks) gefertigt werden, bei denen lediglich eine Fläche, in der Regel die aufwendiger herzustellende Fläche, also beispielsweise eine asphärische Fläche, fertig bearbeitet ist. Um einen bestimmten Wirkungsbereich von typischerweise einigen Dioptrien vollständig abzudekken, wird dann die zweite Fläche entsprechend der verordneten Wirkung gefertigt. Bei sphärischen Flächen werden typischerweise 6 bis 8 Basiskurven benötigt, um den Wirkungsbereich von +8 dpt bis -10 dpt abzudecken.

Die erfindungsgemäß vorgeschlagene Variation des Brechungsindex hat nun innerhalb eines derartigen Basiskurven-Systems eine Reihe von unerwarteten Vorteilen:

Durch den erfindungsgemäß zur Korrektur der Abbildungsfehler in dem Teil des Glasmaterials "hinter" dem augenseitigen Flächenscheitel variierenden Brechungsindex hängt die Korrektur des Brillenglases praktisch nicht von der zur Erzielung eines bestimmten Rezeptwertes gewählten Vorderfläche ab. Dies bedeutet, daß sich bei einer Variation der Vorderfläche, wie sie typischerweise benötigt wird, um in der gewünschten Abstufung die verschiedenen Rezeptwerte fertigen zu können, die Abbildungsfehler des Brillenglases bei vorgegebener augenseitiger Fläche und festem Indexprofil in jedem Falle unter einer bestimmten Grenze halten lassen.

Noch überraschender ist jedoch die Tatsache, daß sich zu einem gegebenen Verlauf des durch die Gradienten-erzeugenden Fläche(n) bestimmten Gradienten immer eine Reihe von Flächen und insbesondere von asphärischen Flächen für ein Basiskurven-System finden lassen, mit dem sowohl die Forderung nach geringer kritischer Dicke als auch die Forderung nach einer guten Korrektur der Abbildungsfehler erfüllbar ist.

Dies hat zur Folge, daß zur Fertigung benachbarter Basiskurven die gleichen "Ausgangselemente", d.h. Glas- oder Kunststoffkörper mit einer oder zwei Gradienten-erzeugenden Flächen in ein und demselben Ionen-Austauscherbad unter gleichen Bedingungen hergestellten Rohlinge verwendet werden können.

Damit erlaubt der erfindungsgemäß ausgewählte Verlauf des Brechungsindex eine rationelle Herstellung von Brillengläsern über einen großen Wirkungsbereich.

**Kurze Beschreibung der Zeichnung**

Die Erfindung wird nachstehend anhand von Ausführungsbeispielen unter Bezugnahme auf die Zeichnung näher beschrieben, in der zeigen:

| | |
|---|---|
| Fig. 1 | einen Linsenschnitt durch ein erfindungsgemäßes Brillenglas zur Erläuterung der verwendeten Bezeichnungen. |
| Fig. 2a | einen Querschnitt durch ein Brillenglas mit Plus-Wirkung, bei dem die Gradienten-erzeugende Fläche eine Ebene ist, |
| Fig. 2b | schematisch den zugehörigen Verlauf des Brechungsindex, |

| | |
|---|---|
| Fig. 3a | einen Querschnitt durch ein Brillenglas mit Minus-Wirkung, bei dem die Gradienten-erzeugende Fläche eine Ebene ist, |
| Fig. 3b | schematisch den zugehörigen Verlauf des Brechungsindex, |
| Fig. 4a | die Abbildungsfehler eines herkömlichen Brillenglases mit positiver Wirkung, bei dem der Brechungsindex nicht variiert. |
| Fig. 4b | die Variation des Brechungsindex für ein erstes Ausführungsbeispiel der Erfindung, |
| Fig. 4c | die Abbildungsfehler dieses Ausführungsbeispiels mit der gleichen Wirkung und der gleichen Flächengestaltung wie bei dem Glas gemäß Fig. 4a, jedoch mit einer Variation des Brechungsindex gemäß Fig. 4b, |
| Fig 5a bis c | Darstellungen analog zu Fig. 4a -c für ein Brillenglas mit einer unter dem Gesichtspunkt der Minimierung der Mittendicke gewählten Vorderfläche, |
| Fig 6a | die Abbildungsfehler eines dritten Ausführungsbeispiels, bei dem die Variation des Brechungsindex sowohl zur Korrektur der Abbildungsfehler als auch zur Reduzierung der kritischen Dicke dient, |
| Fig 6b | den zugehörigen Verlauf des Brechungsindex, |
| Fig 7 | die Abbildungsfehler eines üblichen Brillenglases mit negativer Wirkung, bei dem der Brechungsindex nicht variiert, |
| Fig 8a | die Abbildungsfehler eines Brillenglases mit konstantem Brechungsindex und mit einer unter dem Gesichtspunkt der Minimierung der Randdicke gewählten asphärischen augenseitigen Fläche, |
| Fig 8b | die Variation des Brechungsindex für ein viertes Ausführungsbeispiel der Erfindung, |
| Fig 8c | die Abbildungsfehler dieses Ausführungsbeispiels mit der gleichen Wirkung und der gleichen Flächengestaltung wie bei dem Glas gemäß Fig. 8a, jedoch mit einer Variation des Brechungsindex gemäß Fig. 8b, |
| Fig 9a bis c | Darstellungen analog zu Fig. 4a -c für ein fünftes Ausführungsbeispiel mit einer unter dem Gesichtspunkt der Minimierung der Mittendicke gewählten Vorderfläche und einer als sphärische Fläche ausgebildeten Gradienten-erzeugenden Fläche, |
| Fig.10a | die Abbildungsfehler eines Brillenglases mit konstantem Brechungsindex und mit einer unter dem Gesichtspunkt der Minimierung der Randdicke gewählten asphärischen augenseitigen Fläche, |
| Fig.10b | die Variation des Brechungsindex für ein sechstes Ausführungsbeispiel der Erfindung, |
| Fig.10c | die Abbildungsfehler dieses Ausführungsbeispiels mit der gleichen Wirkung und der gleichen Flächengestaltung wie bei dem Glas gemäß Fig.10a, jedoch mit einer Variation des Brechungsindex gemäß Fig.10b, |
| Fig.11a bis c | Darstellungen analog zu Fig. 8a -c für ein siebtes Ausführungsbeispiel mit einer unter dem Gesichtspunkt der Minimierung der Mittendicke gewählten Vorderfläche mit Tragrand und einer als sphärische Fläche ausgebildeten Gradienten-erzeugenden Fläche, |
| Fig.12a bis c | Darstellungen analog zu Fig. 4a -c für ein achtes Ausführungsbeispiel mit einer unter dem Gesichtspunkt der Minimierung der Randdicke gewählten augenseitigen Fläche mit Tragrand und einer als sphärische Fläche ausgebildeten Gradienten-erzeugenden Fläche, |
| Fig.13a und b | Bildfehler eines neunten Ausführungsbeispiels eines erfindungsgemäßen Brillenglases mit astigmatischer Wirkung, und |
| Fig.14a und b | die Bildfehler eines herkömlichen Brillenglases mit astigmatischer Wirkung zum Vergleich. |

## Beschreibung von Ausführungsbeispielen

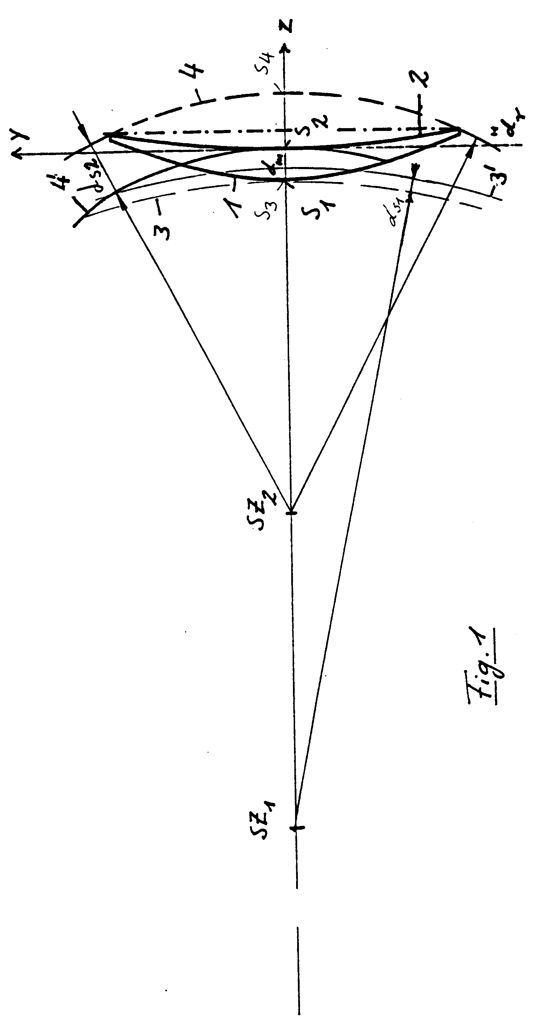

Fig. 1 zeigt zur Erläuterung der nachstehend verwendeten Begriffe einen Linsenschnitt durch ein erfindungsgemäßes Brillenglas sowie das im folgenden verwendete Koordinatensystem x,y,z:

Das Brillenglas weist eine Vorderfläche 1 mit einem Glasscheitel $S_1$ sowie eine augenseitige Fläche 2 mit einem Glasscheitel $S_2$ auf. Der Abstand des Scheitels $S_1$ der Vorderfläche 1 vom Scheitel $S_2$ der augenseitigen Fläche (Rückfläche) 2 ist die sog. Mittendicke $d_m$, die bei Gläsern mit positiver Wirkung die kritische Dicke ist, d.h. die "größte Dicke" ist. Darüberhinaus sind in Fig. 1 die Randdicke $d_r$, die bei Gläsern mit negativer Wirkung die kritische Dicke ist, und die sog. Eindringtiefe $d_{s1}$ und $d_{s2}$ der beiden weiter unten näher erläuterten Flächenscharen mit konstantem Brechungsindex eingezeichnet. Dabei wird unter Eindringtiefe $d_s$ der Bereich verstanden, über den sich senkrecht zur Oberfläche der Gradienten-

6

EP 0 347 917 B1

erzeugenden Fläche 3 bzw. 4 der Brechungsindex n(x,y,z) "optisch relevant" ändert. Innerhalb des durch die Linien 3′ und 4′, die die Eindringtiefe angeben, begrenzten Bereichs ist demnach der Brechungsindex konstant.

Für den kosmetischen Eindruck ist bei den in Fig. 1 dargestellten Gläsern mit positiver Wirkung die sog. Scheiteltiefe von Bedeutung, d.h. die Erhebung des Scheitels $S_1$ über die Ebene durch den Glasrand, die in Fig. 1 strichpunktiert eingezeichnet ist. Je größer diese Erhebung ist, desto "unschöner" ist das Aussehen der Brille gerade bei Verwendung von modisch großen Fassungen. Die Wahl sog. flacherer Basiskurven hat demnach neben der Verringerung der Mittendicke, die für das Gewicht des Brillenglases entscheidend ist, die Reduzierung der Scheiteltiefe zum Ziel.

Die z-Achse des Koordinatensystems liegt in der Verbindungsachse der beiden Scheitel $S_1$ und $S_2$ des Brillenglases, die nicht dargestellte x-Achse steht senkrecht auf der Zeichenebene, die y-Achse weist nach oben. Der Nullpunkt 0 des Koordinatensystems liegt im Scheitel $S_2$ der augenseitigen Fläche 2.

Bei dem in Fig. 1 dargestellten Brillenglas sind die Vorderfläche 1 und die augenseitige Fläche 2 ohne Beschränkung des allgemeinen Erfindungsgedankens rotationssymmetrische Flächen, so daß die z-Achse auch optische Achse ist. Selbstverständlich ist es aber auch möglich, für eine oder beide Flächen Flächen zu verwenden, deren Flächenverlauf dem von Brillengläsern mit astigmatischer und/oder progressiver Wirkung und homogenem Brechungsindex gleicht.

Weiterhin sind in Fig. 1 sogenannte Gradienten-erzeugende Flächen 3 und 4 gestrichelt eingetragen, zu der Flächenscharen $n_1(x,y,z) = $ const. und $n_2(x,y,z) = $ const. mit konstantem Brechungsindex, beispielsweise die Flächen 3′ und 4′ Parallelflächen sind. Die Gradienten-erzeugende Fläche 3 ist dabei auf der Seite der Vorderfläche 1 und die Gradienten-erzeugende Fläche 4 auf der Seite der augenseitigen Fläche 2 vorgesehen. Der Begriff Gradienten-erzeugende Fläche ist von einem bevorzugten Verfahren zur Herstellung der erfindungsgemäßen Brillengläser abgeleitet:

Bei diesem Verfahren wird zunächst ein Rohling mit einer oder zwei Gradienten-erzeugenden Flächen hergestellt. Senkrecht zu diesen Flächen, also beispielsweise der Fläche 3 wird eine Variation des Brechungsindex erzeugt, so daß sich Flächen mit konstantem Brechungsindex $n_1(x,y,z) = $ const. ergeben, die zu der Gradienten-erzeugenden Fläche 3 "Parallelflächen" sind. Dabei wird unter Parallelflächen eine Schar von Niveauflächen mit jeweils konstantem Brechungsindex verstanden, die in Richtung ihrer Flächennormalen in allen Punkten jeweils gleichen Abstand haben.

Im folgenden werden Beispiele erläutert, bei denen die Gradienten-erzeugenden Flächen

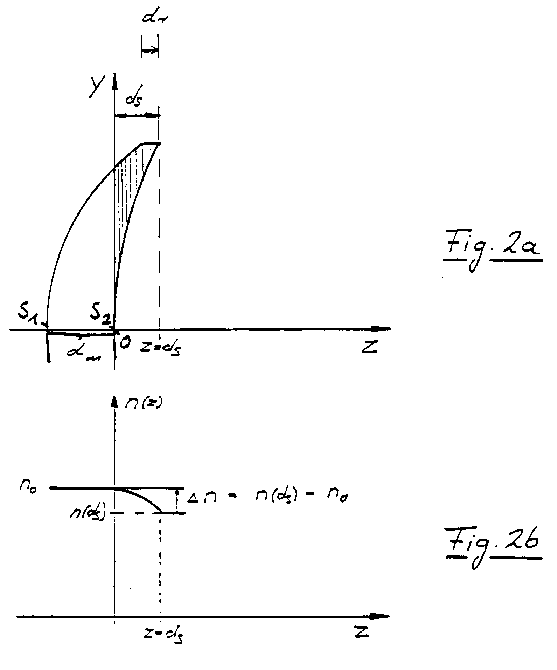

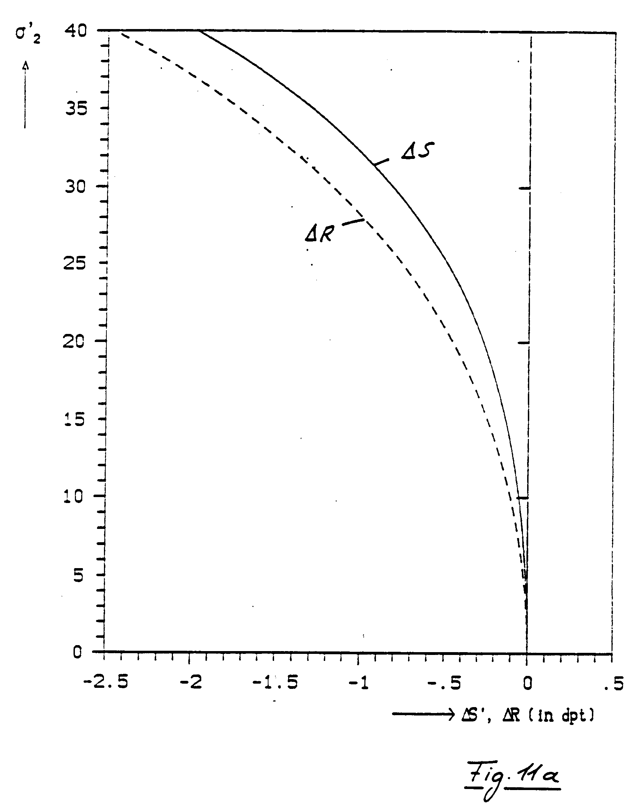

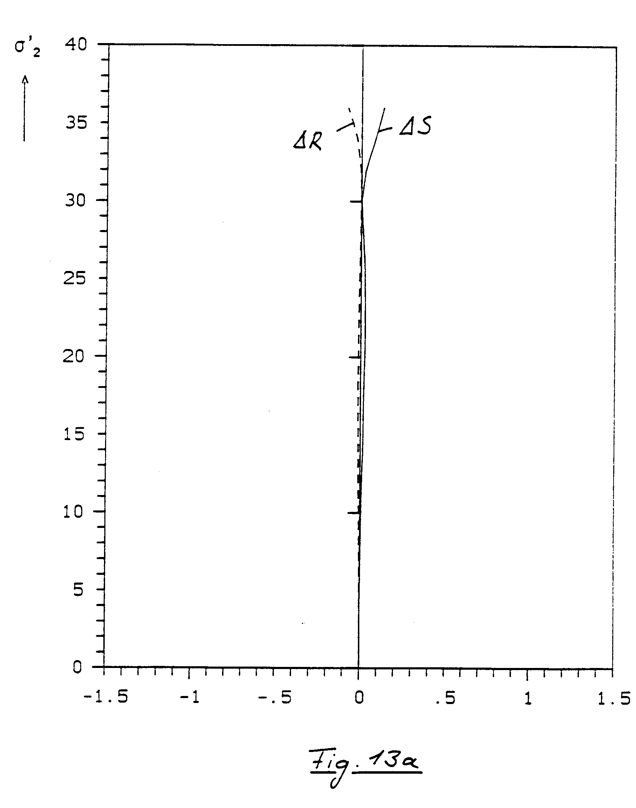

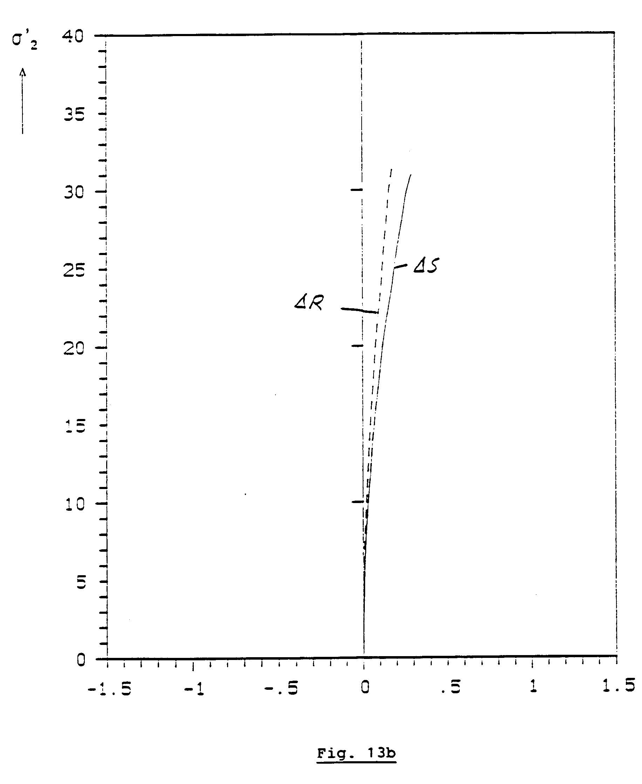

Ebenen:                     Fig. 2 bis Fig. 8
sphärische Flächen:         Fig. 9 bis Fig.12
(a)torische Flächen:        Fig.13 ff.

sind.

Sofern die Eindringtiefe der beiden durch die beiden Gradienten-erzeugenden Flächen gebildeten Flächenscharen mit jeweils konstantem Brechungsindex gering ist, weist das Brillenglas zwei weitgehend voneinander unbeeinflußte Parallel-Flächenscharen auf:

Erfindungsgemäß hat sich nun herausgestellt, daß durch Parallelflächen $n_1(x,y,z) = $ const. mit konstantem Brechungsindex, die die die Glasscheitel $S_1$ und $S_2$ verbindende Achse z zwischen den Scheiteln schneiden, im wesentlichen eine Reduktion der Mittendicke des Brillenglases erzielt werden kann, während durch Parallelflächen $n_2(x,y,z) = $ const. mit konstantem Brechungsindex, die, genauer gesagt deren unter Zugrundelegen der die Flächen $n(x,y,z) = $ const. beschreibenden Formeln berechnete "analytische" Fortsetzung über die augenseitige Fläche 2 oder die Vorderfläche 1 hinaus die Achse z "hinter", d.h. in Fig. 1 rechts vom augenseitigen Glasscheitel $S_2$ oder "vor" dem objektseitigen Glasscheitel $S_1$ schneiden, im wesentlichen eine Korrektur der Abbildungsfehler erreicht werden kann.

Dies ist ein besonders bedeutsames Ergebnis der Erfindung, da es eine weitgehend voneinander entkoppelte Beeinflussung der Mittendicke und der Korrektur der Abbildungsfehler ermöglicht, wobei unabhängig von bestimmten, den Indexgradienten erzeugenden Herstellverfahren eine bestimmte Gestaltung der Parallelflächen $n(x,y,z) = $ const. erreicht werden kann.

Selbstverständlich ist es aber auch möglich, daß die Gradienten-erzeugenden Flächen 3 bzw. 4 derart angeordnet sind, daß ihre Mittelpunkte nicht auf der die beiden Glasscheitel $S_1$ und $S_2$ verbindenden Achse z liegen, und/oder daß die Flächen 3 und 4 andere Flächen als in den nachfolgend beschriebenen Ausführungsbeispielen sind:

Beispielsweise im Falle allgemeiner rotationssymmetrischer Gradienten-erzeugender Flächen haben dann die einzelnen Parallelflächen mit jeweils konstantem Brechungsindex im Meridianschnitt, d.h. in dem in den Fig. 1 dargestellten Schnitt, eine gemeinsame Evolute.

Weiterhin hat sich erfindungsgemäß herausgestellt, daß für den Abstand A der Scheitel $S_3$ bzw. $S_4$ der Gradientenerzeugenden Flächen 3 bzw. 4 vom Scheitel der nächstliegenden Begrenzungsflächen (1 oder 2)

7

die Bedingung erfüllt sein muß:

$$A \leq 20 * L_{n(x,y,z)=const.}$$

hierbei ist $L_{n(x,y,z)=const.}$ die Länge der Grenzlinie 3' bzw. 4' in dem in Fig. 1 dargestellten Linsenschnitt zwischen dem Gebiet mit konstantem, d.h für praktische Verhältnisse sich nicht mehr änderndem Brechungsindex und dem Gebiet mit sich änderndem Brechungsindex.

Das Einhalten dieser Bedingung stellt sicher, daß die Niveauscharen ein Lage relativ zu den Begrenzungsflächen unter Berücksichtigung ihrer Eindringtiefe haben, daß die Änderung des Brechungsindex eine ausreichende "optische Wirkung" hat.

Die Gradienten-erzeugenden Flächen 3 bzw. 4 können aber auch eine Flächengestaltung ähnlich progressiven Flächen haben, wie sie derzeit bei Brillengläsern mit konstantem Brechungsindex zur Erzeugung eines Wirkungsanstieges verwendet werden. Im Falle der Verwendung derartiger "progressiver" Flächen als Gradienten-erzeugende Fläche erhält man auch dann, wenn die später aus dem Rohling herausgearbeiteten Begrenzungsflächen 1 und 2 rotationssymmetrische Flächen sind, einen progressiven Wirkungsanstieg.

Im folgenden sollen numerische Ausführungsbeispiele zu dem in Fig. 1 dargestellten allgemeinen Beispiel vorgestellt werden.

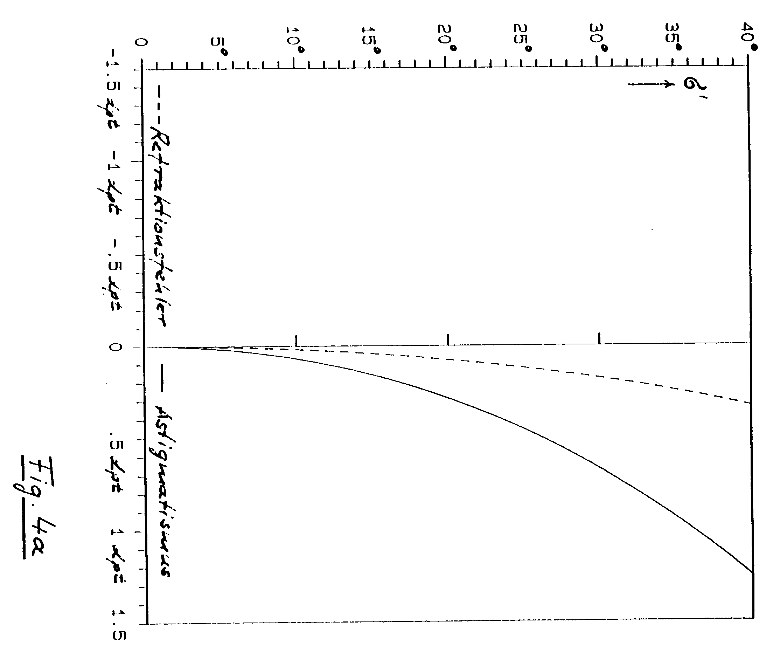

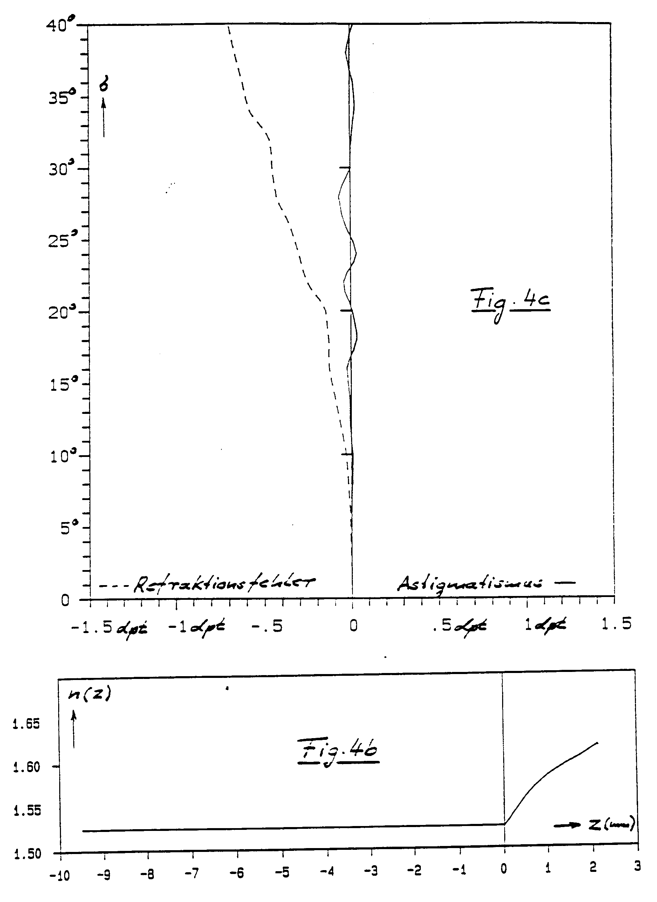

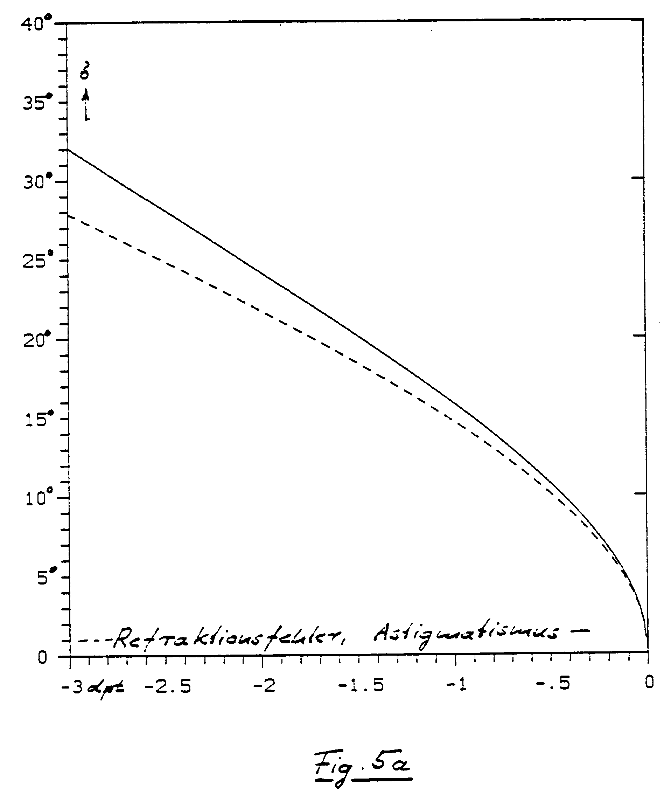

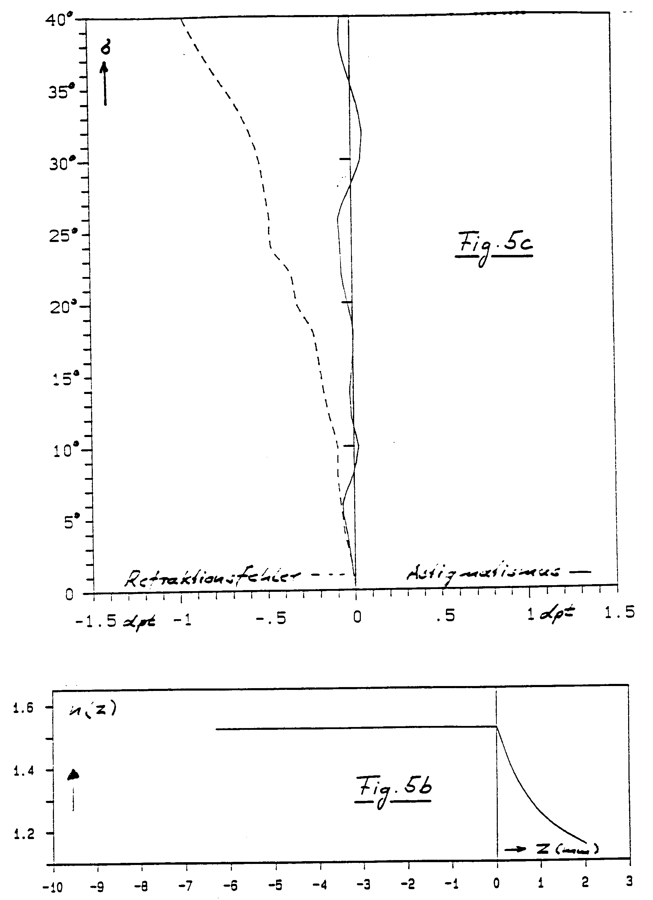

In den Teilfiguren a und c der Figuren 4 bis 12 ist der Astigmatismus $\Delta S$ mit durchgezogenen Linien und der sog. Refraktionsfehler $\Delta R$, d.h. die Abweichung des mittleren Brechwertes in einem Punkt von dem sog. Rezept-Wert mit gestrichelten Linien als Funktion des Blickwinkels $\sigma$ aufgetragen. Der Astigmatismus $\Delta S$ und der Refraktionsfehler $\Delta R$ sind definiert durch:

$$\Delta S = S'_m - S'_s \qquad (1)$$

$$\Delta R = (S'_m + S'_s)/2 - S'_o; \qquad (2)$$

hierbei sind:
- $S'_m$      tangentialer Brechwert
- $S'_s$      sagittaler Brechwert
- $S'_o$      der Rezept-Wert

Die Werte sind jeweils in Gebrauchsstellung bezogen auf den Hauptstrahl bei Zentrierung nach der Augendrehpunktsforderung angegeben.

In den Teilfiguren a bzw. c sind der Astigmatismus $\Delta S$ und der Refraktionsfehler $\Delta R$ für ein erfindungsgemäßes Brillenglas, d.h ein Glas mit variierendem Brechungsindex und ein "homogenes" Vergleichsglas, d.h. ein Glas mit gleicher Flächengestaltung wie bei dem erfindungsgemäßen Glas, aber konstantem, d.h. homogenem Brechungsindex angegeben.

Bei dem erfindungsgemäßen Glas variiert der Brechungsindex entsprechend der in den Teilfiguren b dargestellten Funktion. In diesen Teilfiguren ist der Brechungsindex (Brechzahl) n als Funktion der in Fig. 1 bis 3 definierten Koordinate z aufgetragen. Ferner ist zum Teil in den Teilfiguren b ein Linsenschnitt durch das jeweilige Brillenglas eingetragen.

## Gradienten-erzeugende Flächen: Ebenen

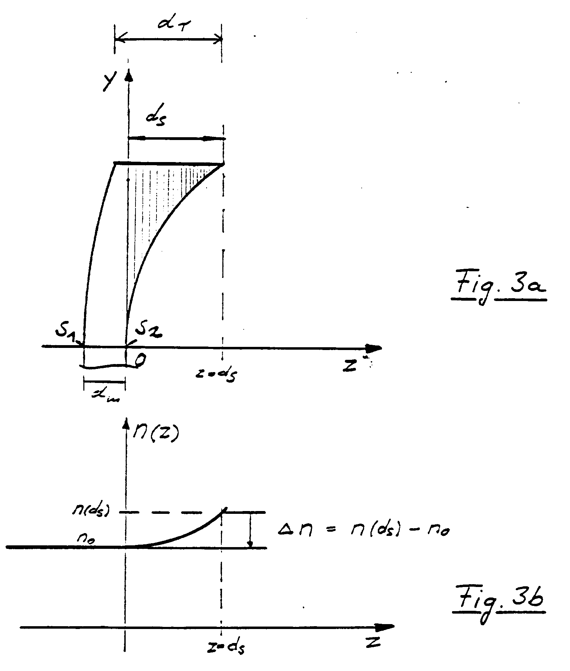

Die Fig.2 und 3 zeigen eine ähnliche Darstellung wie Fig. 1 für den Fall, daß als Gradienten-erzeugende Fläche 4 und bei einem Beispiel auch für die Gradienten-erzeugende Fläche 3 eine Ebene verwendet wird, die senkrecht auf der die beiden Glasscheitel verbindenden Achse steht. Hierzu ist in den Fig. 2 und 3 zur Verdeutlichung nochmals das verwendete Koordinatensystem eingetragen.

Fig. 2a zeigt dabei einen Querschnitt durch ein Brillenglas mit Plus-Wirkung. Wie bereits ausgeführt, ist der Abstand des Scheitels $S_1$ der Vorderfläche 1 vom Scheitel $S_2$ der augenseitigen Fläche (Rückfläche) 2, d.h. die sog. Mittendicke $d_m$, bei Gläsern mit positiver Wirkung die kritische Dicke, die so klein wie möglich sein sollte.

Weiterhin sind in Fig. 2a die Randdicke $d_r$ und die sog. Scheiteltiefe $d_s$ eingezeichnet.

Fig. 2b zeigt schematisch den zugehorigen erfindungsgemäßen Verlauf des Brechungsindex n, der sich bei der Verwendung einer Ebene für die Gradienten-erzeugende Fläche 4 ergibt. Der Brechungsindex ist in diesem Falle lediglich eine Funktion der Koordinate z. Soll durch die Variation des Brechungsindex ausschließlich eine Korrektion peripherer Abbildungsfehler erfolgen, so ist der Brechungsindex n zwischen den Scheiteln $S_1$ und $S_2$ des Glases, d.h. für z<0 konstant und hat den Wert $n_o$, d.h. die in Fig. 1 eingezeichnete Gradienten-erzeugende Fläche 3 wird nicht "benutzt". Erfindungsgemäß variiert dann der Brechungsindex lediglich in dem (in Strahlrichtung) hinter der durch den augenseitigen Glasscheitel $S_2$ gehenden x/y-Ebene liegenden Material; bei dem schematischen Beispiel nimmt die Brechzahl n für Werte von $z \geq 0$ von dem Wert $n_o$ auf den Wert $n(d_s)$ ab. Dies ist durch eine entsprechende Schraffur angedeutet.

Fig. 3a zeigt einen entsprechenden Querschnitt durch ein Brillenglas mit Minus-Wirkung. Dabei sind gleiche Größen wie in Fig. 1 und 2 mit den gleichen Bezugszeichen versehen, so daß auf eine detaillierte Beschreibung verzichtet werden kann.

Im Gegensatz zu Gläsern mit Plus-Wirkung ist bei Gläsern mit Minus-Wirkung nicht die Mittendicke $d_m$, sondern die Randdicke $d_r$ die kritische Dicke.

Fig. 3b zeigt schematisch den zugehörigen erfindungsgemäßen Verlauf des Brechungsindex n. Der Brechungsindex ist wiederum lediglich eine Funktion der Koordinate z. Soll durch die Variation des Brechungsindex die Korrektion peripherer Abbildungsfehler erfolgen, so ist der Brechungsindex n zwischen den Scheiteln $S_1$ und $S_2$ des Glases, d.h. für z<0 konstant und hat den Wert $n_o$. Erfindungsgemäß variiert dann der Brechungsindex lediglich in dem (in Strahlrichtung) "hinter" der durch den augenseitigen Glasscheitel $S_2$ gehenden x/y-Ebene liegenden Material; in Fig. 3b nimmt die Brechzahl n für Werte von $z \geq 0$ von dem Wert $n_o$ auf den Wert $n(d_s)$ zu. Dies ist durch eine entsprechende Schraffur angedeutet.

Im folgenden sollen verschiedene numerische Ausführungsbeispiele für erfindungsgemäße Brillengläser mit Ebenen als Gradienten-erzeugende Flächen 3 und 4 erlautert und mit Brillengläsern mit konstantem Brechungsindex verglichen werden. Dabei sind in den Fig. 4 bis 8 Gläser mit positiver Wirkung und in den Fig. 9 bis 11 Gläser mit negativer Wirkung dargestellt.

Sämtliche Gläser mit positiver Wirkung haben die gleiche Gesamtwirkung S' = 8,00 dpt, die gleiche Krümmung $C_2 = 1/R_2 = 5,71$ dpt der (sphärischen) augenseitigen Fläche 2 (R: Krümmungsradius im Flächenscheitel) und den gleichen Durchmesser d von 66mm. Bei den in den Fig. 4, 5 und 8 dargestellten Beispielen ist die Vorderfläche 1 eine sphärische Fläche, bei den in Fig. 6 und 7 dargestellten Beispielen dagegen eine asphärische Fläche. Die asphärische rotationssymmetrische Fläche ist ohne Beschränkung des allgemeinen Erfindungsgedankens eine Kegelschnittfläche. Selbstverständlich ist es aber auch möglich, komplizierter aufgebaute asphärische Flächen zu verwenden

Die Pfeilhöhe $\Delta z$ eines Punktes (= Abstand dieses Punktes vom Flächenscheitel $S_1$ in Richtung der optischen Achse z) ist dann gegeben durch:

$$\Delta z = Cr^2/(1 + (1-(K+1)C^2r^2)^{1/2}) \qquad (3)$$

mit

r:       Abstand des Punktes von der optischen Achse z

C = 1/R mit R:     Krümmungsradius der Fläche im Scheitel $S_1$

K:       Kegelschnittkoeffizient

In der folgenden Tabelle 1 sind für die verschiedenen Beispiele die einzelnen Größen numerisch angegeben:

## Tabelle 1

| Beispiel Fig. | 4a | 4c | 5c | 5a | 6 |
|---|---|---|---|---|---|
| S' (dpt) | 8,00 | 8,00 | 8,00 | 8,00 | 8,00 |
| $C_1 = 1/R_1$ (dpt) | 19,61 | 19,61 | 20,04 | 20,04 | 16,49 |
| $K_1$ | 0 | 0 | -3.43 | -3,43 | 0 |
| $C_2 = 1/R_2$ (dpt) | 5,71 | 5,71 | 5,71 | 5,71 | 5,71 |
| $d_m$ (mm) | 9,48 | 9,48 | 6,32 | 6,32 | 7,12 |
| $d_r$ (mm) | 0,5 | 0,5 | 0,5 | 0,5 | 0,5 |
| d (mm) | 66 | 66 | 66 | 66 | 66 |
| n | 1,525 | n(z) | 1,525 | n(z) | n(z) |

Ausführungsbeispiel 1

Fig. 4a zeigt die Abbildungsfehler, d.h. den Astigmatismus $\Delta S$ und den Refraktionsfehler $\Delta R$ in dpt. eines üblichen Brillenglases mit einer Wirkung $S'$ von 8 dpt. Bei einem derartigen Brillenglas ist die Durchbiegung der Vorderfläche 1 und der Rückfläche 2 ein Kompromiß zwischen der unter dem Gesichtspunkt der Abbildungsqualität optimalen Durchbiegung und der unter kosmetischen Gesichtpunkten erwünschten "flacheren" Flächendurchbiegung. Wie man Fig. 4 entnimmt sind sowohl Astigmatismus $\Delta S$ als auch der Refraktionsfehler $\Delta R$ positiv. Ein positiver Refraktionsfehler $\Delta R$ ist eigentlich nicht erwünscht, da er nicht durch Akkommodieren ausgeglichen werden kann.

Fig. 4c zeigt den Verlauf des Astigmatismus und des Refraktionsfehlers als Funktion des Blickwinkels für ein erstes Ausführungsbeispiel eines erfindungsgemäßen Brillenglases mit gleicher Flächengestaltung wie bei dem Brillenglas gemäß Fig. 4a. Bei dem in Fig. 4c dargestellten Brillenglas variiert jedoch der Brechungsindex n als Funktion von z in der in Fig. 4b dargestellten Weise. Der Brechungsindex ist dabei "zwischen" den Flächenscheiteln $S_1$ und $S_2$ konstant und hat den Wert 1,525 und nimmt "hinter" der x/y-Ebene (s.Fig. 1 bzw. 2a) in der in Fig. 4b dargestellten Weise zur Korrektur der Bildfehler zu. Die Zunahme ist eine Folge der Tatsache, daß der in erster Linie zu korrigierende Bildfehler (Astigmatismus) über den Blickwinkelbereich zu große postive Werte hat.

Dabei ist bei der Auswahl der Brechzahl-Variation bewußt kein Wert auf die Verringerung der kritischen Dicke, d.h. der Mittendicke bei Plusgläsern gelegt worden, sondern lediglich eine weitergehende Korrektur der Abbildungsfehler angestrebt worden. Wie man sieht, läßt sich der Astigmatismus bis zu einem Wert des Blickwinkels $\sigma$ von 40° praktisch auf 0 dpt. halten. Der Refraktionsfehler nimmt zwar zu größeren Blickwinkeln auf den vergleichsweise geringen Wert von ca. -0,7 dpt. zu, der negative Refraktionsfehler kann aber - zumindest bei nicht Voll-Presbyopen - durch Akkommodieren ausgeglichen werden. Dabei ist von besonderem Vorteil, daß sich - obwohl lediglich eine Größe zur Korrektur zweier Bildfehler zur Verfügung steht - ein physiologisch günstiger Verlauf des nicht in erster Linie korrigierten Bildfehlers (Refraktionsfehlers) ergibt.

Ausführungsbeispiel 2

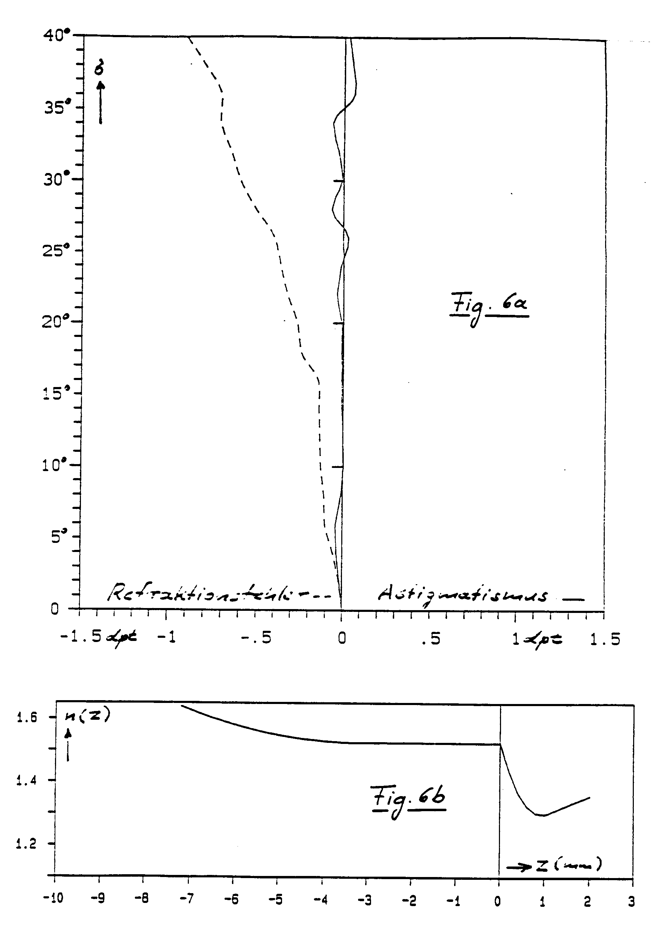

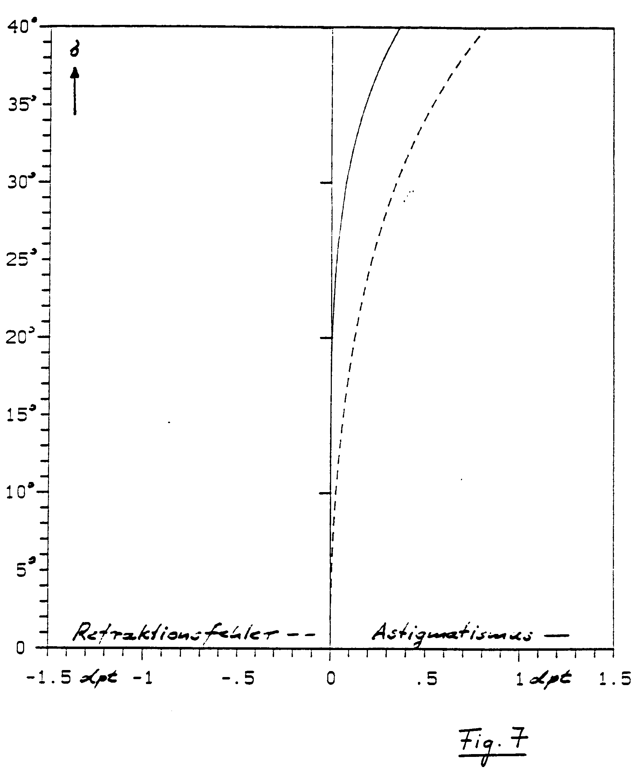

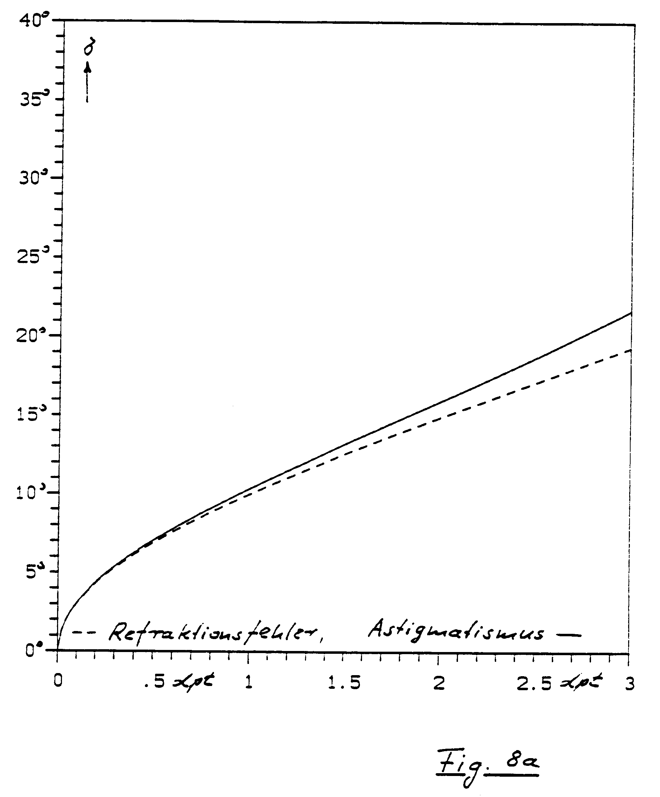

Fig. 5a zeigt den Verlauf der Abbildungsfehler für ein Brillenglas, bei dem die Vorderfläche asphärisch gestaltet ist. Die Vorderfläche ist dabei ein Kegelschnitt gemäß Gleichung (3), dessen charakteristische Größen in Tabelle 1 angegeben sind. Der Verlauf der asphärischen Flächengestaltung ist dabei nur unter dem Gesichtspunkt der Verringerung der Mittendicke $d_m$, nicht jedoch unter dem Gesichtspunkt der Korrektion gewählt. Wie man unschwer Fig. 5a entnimmt, ergeben sich bei "konstantem Brechungsindex" bereits bei vergleichsweise geringen Blickwinkel $\sigma$ von 30° nichtakzeptable Bildfehler: So sind der Refraktionsfehler (gestrichelte Linie) und der Astigmatismus (durchgezogene Linie) jeweils größer als ca. -3,0 dpt.

Fig. 5c zeigt den Verlauf der Bildfehler für ein Brillenglas mit gleicher Flächengestaltung wie bei dem in Fig. 5a dargestellten Brillenglas, der Brechnungsindex variiert jedoch in der in Fig. 5b dargestellten Weise. Die Abnahme der Brechzahl ist eine Folge der Tatsache, daß die zu korrigierenden Bildfehler (Refraktionsfehler und Astigmatismus) wesentlich zu große negative Werte haben.

Wie man sieht, können durch die Variation des Brechungsindex beide Bildfehler so korrigiert werden, daß der Astigmatismus $\Delta S$ über den gesamten Blickwinkelbereich praktisch 0 dpt. beträgt, während der Refraktionsfehler $\Delta R$ selbst bei einem Blickwinkel $\sigma$ von 40° kleiner als -1,0 dpt. ist. Dabei ist wiederum zu beachten, daß negative Werte des Refraktionsfehlers leicht durch Akkommodieren ausgeglichen werden können.

Ausführungsbeispiel 3

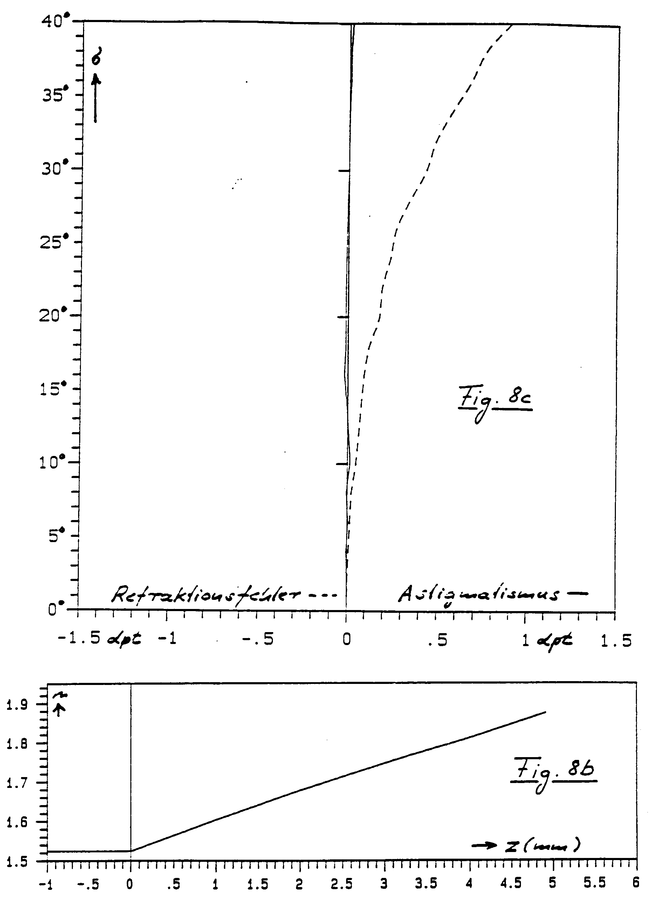

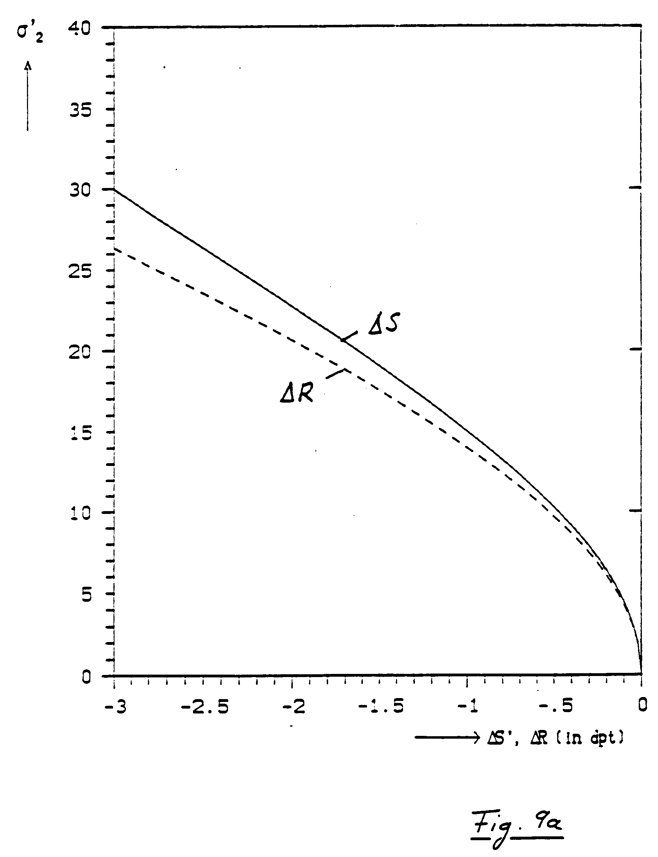

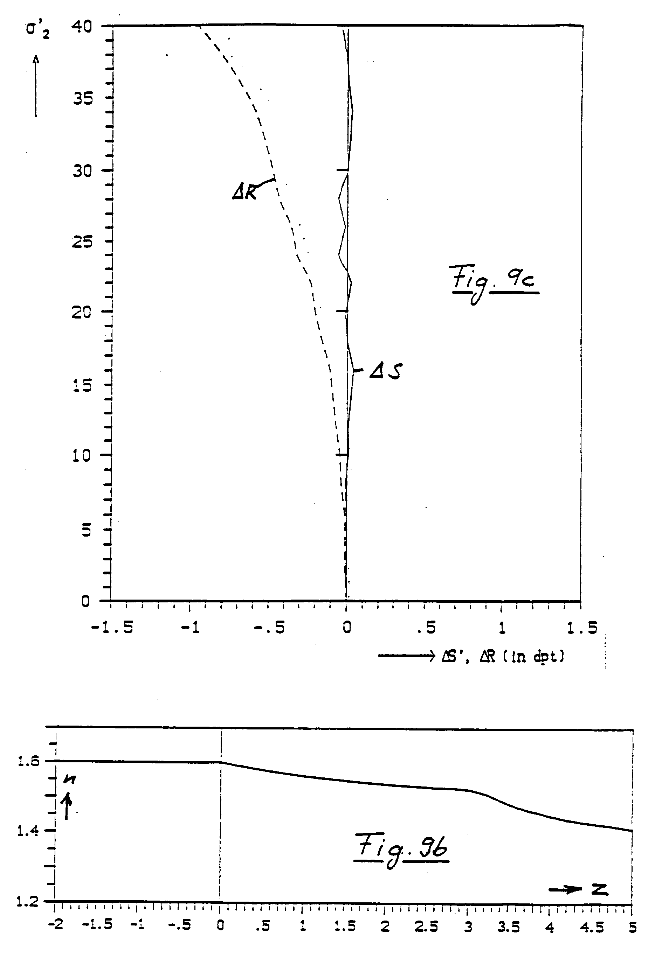

Fig. 6a zeigt den Verlauf der Bildfehler für ein Brillenglas, dessen Begrenzungsflächen sphärische Flächen sind. Zur Verringerung der Mittendicke $d_m$ ist sowohl die Durchbiegung der Flächen "stärker abweichend" von der Tscherning'schen Regel als bei dem in Fig. 4a bzw. 4c dargestellten Brillenglas gewählt, als auch zusätzlich eine Variation des Brechungsindex "zwischen den Glasscheiteln $S_1$ und $S_2$" eingeführt. Anders ausgedrückt, wird bei diesem Ausführungsbeispiel nicht nur die Gradienten-erzeugende Fläche 4, sondern auch die Gradienten-erzeugende Fläche 3 bentutzt, um eine Variation des Brechungsindex zu erzeugen. Beide Gradienten-erzeugende Flächen sind bei diesem Ausführungsbeispiel Ebenen. Der Brechungsindex variiert - wie in Fig. 6b dargestellt - also nicht nur "hinter der augenseitigen Fläche", sondern auch derart, daß er im Bereich der stärker zum Brechwert beitragenden Fläche, d.h. im Bereich der Vorderfläche bei einem Glas mit Plus-Wirkung einen größeren Wert als im Grundmaterial hat.

Dabei kann bei einer Gesamtwirkung des Brillenglases von 8,0 dpt. und einem Ausgangs-Brechungsindex von 1,525 die Mittendicke gegenüber üblichen Brillengläsern gemäß Fig. 4c um 25% verringert werden. Trotzdem ist es möglich, bestimmte Korrektionsbedingungen einzuhalten; bei dem gezeigten Ausführungsbeispiel ist als Korrektionsbedingung verwendet worden, daß der Astigmatismus über den gesamten Blickwinkelbereich praktisch gleich Null ist.

Im folgenden sollen Gläser mit Minuswirkung als weitere Ausführungsbeispiele erläutert werden.

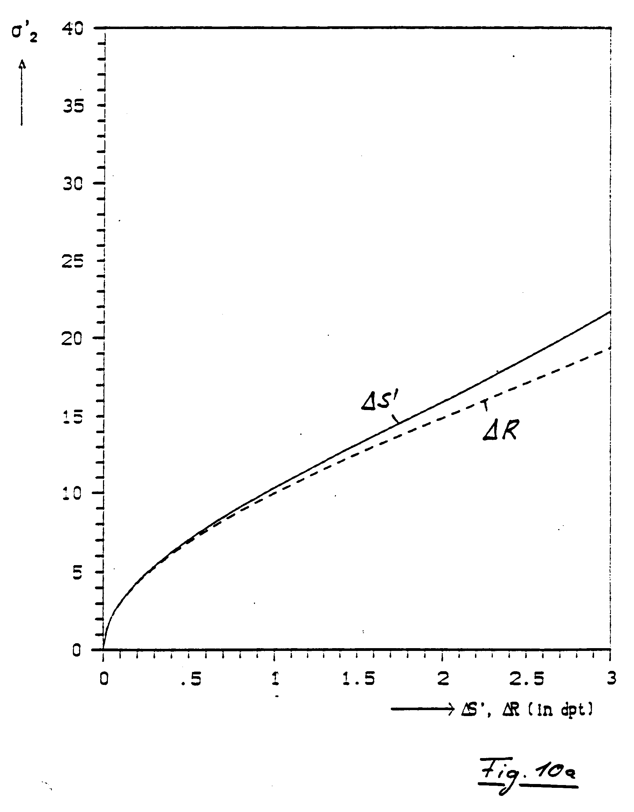

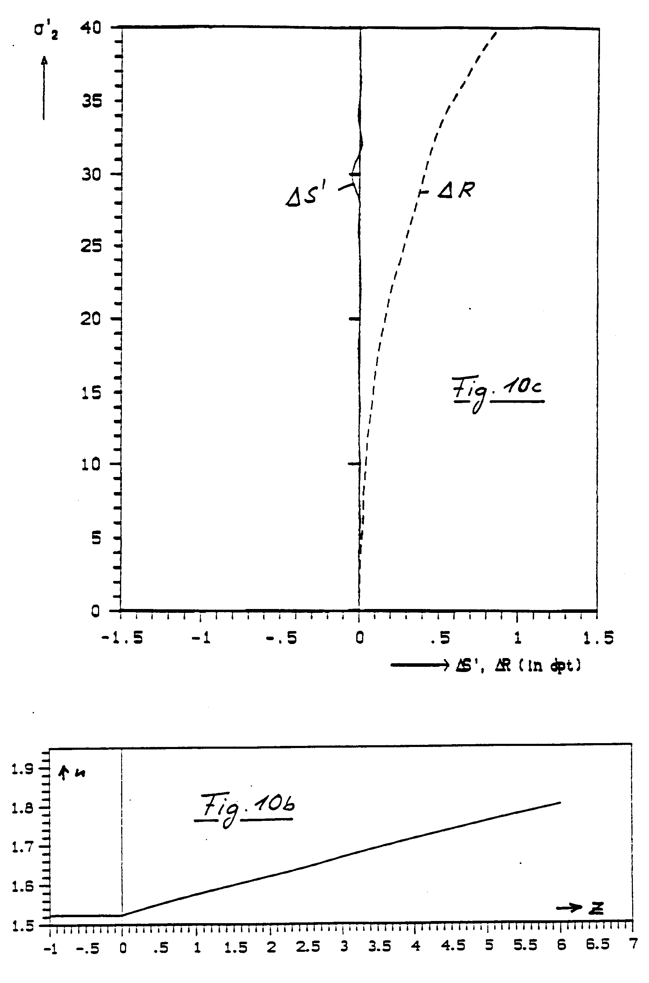

Sämtliche Gläser mit Minus-Wirkung haben die gleiche Gesamtwirkung $S' = -10,00$ dpt, die gleiche Krümmung $C_1 = 1/R_1 = 3,81$ dpt der (sphärischen) Vorderfläche 1 und den gleichen Durchmesser d von 66mm. Bei dem in Fig. 7 dargestellten Beispiel ist die Rückfläche 1 eine sphärische Fläche, bei den in Fig. 8 und 9 dargestellten Beispielen dagegen eine asphärische Fläche. Die asphärische rotationssymmetrische Fläche ist ohne Beschränkung des allgemeinen Erfindungsgedankens eine Kegelschnittfläche, deren Pfeilhöhe $\Delta z$ (= Abstand eines Punktes vom Flächenscheitel $S_2$ in Richtung der z-Achse) durch folgende Gleichung gegeben ist:

$$\Delta z = Cr^2/(1 + (1-(K + 1)C^2r^2)^{1/2} \qquad (4)$$

mit

r: Abstand des Punktes von der optischen Achse z

$C = 1/R_2$ mit $R_2$: Krümmungsradius der Fläche im Scheitel $S_2$

K: Kegelschnittkoeffizient

In der folgenden Tabelle 2 sind für die verschiedenen Beispiele die einzelnen Größen numerisch angegeben:

## Tabelle 2

| Beispiel Fig. | | 7 | 8a | 8c |
|---|---|---|---|---|
| S' | (dpt) | -10,00 | -10,00 | -10,00 |
| $C_1$ | (dpt) | 3,81 | 3,81 | 3,81 |
| $C_2=1/R_2$ | (dpt) | 22,86 | 22,86 | 22,86 |
| $K_1$ | | 0 | -6,93 | -6,93 |
| $d_m$ | (mm) | 1,0 | 1,0 | 1,0 |
| $d_r$ | (mm) | 13,95 | 6,98 | 6,98 |
| d | (mm) | 66 | 66 | 66 |
| n | | 1,525 | 1,525 | n(z) |

Ausführungsbeispiel 4

Figur 7 zeigt ein übliches Brillenglas mit konstantem Brechungsindex, bei dem die Durchbiegung der Vorderfläche 1 und der augenseitigen Fläche 2 als Kompromiß zwischen der unter dem Gesichtspunkt der Abbildungsfehler optimalen Durchbiegung und der aus kosmetischen erwünschten flacheren Durchbiegung gewählt ist. Wie man sieht, sind zwar die Bildfehler vergleichsweise klein, die Randdicke $d_R$ ist jedoch mit 13,95 mm sehr groß, so daß das Glas kaum in modische Brillenfassungen eingeschliffen werden kann und darüberhinaus sehr schwer ist.

Figur 8a zeigt ein Beispiel für ein Glas mit Minus-Wirkung, bei dem zur Verringerung der Randdicke die augenseitige Fläche 2 als asphärische Fläche ausgebildet ist. Die augenseitige Fläche 2 ist ohne Beschränkung der Allgemeinheit eine Kegelschnittfläche gemäß Gleichung (4), deren charakteristische Größen ist Tabelle 2 angegeben sind. Durch die Verwendung dieser asphärischen Fläche läßt sich zwar die Randdicke $d_r$ beträchtlich auf 6,98 mm verringern, die Bildfehler, der Refraktionsfehler und der Astigmatismus erreichen jedoch bereits bei Bildwinkeln von weniger als 20° nicht akzeptable Werte von 2,5 dpt und größer.

Figur 8c zeigt die Wirkung einer Brechungsindex-Variation "hinter dem augenseitigen Flächenscheitel $S_2$" auf die Abbildungsfehler. Die Flächengestaltung des Glases und damit auch die Mitten- und Randdicke entsprechen dem in Figur 8a dargestellten Glas. Insbesondere sind die einzelnen Größe der Kegelschnittfläche der Tabelle 2 zu entnehmen.

Durch die Variation des Brechungsindex gemäß Fig. 8b lassen sich die in Figur 8a dargestellten, durch die Flächengestaltung hervorgerufenen Abbildungsfehler auf sehr kleine Werte korrigieren. Insbesondere ist bei dem vierten Ausführungsbeispiel, dessen Bildfehler in Figur 8c dargestellt sind, wiederum die Korrekturbedingung "Astigmatismus über den Blickwinkelbereich praktisch = 0" eingehalten worden.

Da im "homogenen Fall" sowohl der Refraktionsfehler als auch der Astigmatismus positive Werte angenommen haben, ist - wie Figur 8b zeigt - ein Ansteigen der Brechzahl hinter dem augenseitigen Flächenscheitel (z = 0) erforderlich.

Gradienten-erzeugende Flächen: sphärische Flächen

Bei den in den Fig. 9 bis 12 dargestellten Beispielen ist die Gradienten-erzeugende Flächen 4 ohne Beschränkung des allgemeinen Erfindungsgedankens eine sphärische Flächen, deren mit $SZ_2$ bezeichneter Krümmungsmittelpunkte gleichzeitig Symmetriezentrum für die jeweiligen Parallelflächen ist. Bei den dargestellten Ausführungsbeispielen liegt der Mittelpunkt der sphärischen Fläche 4 auf der die Glasscheitel $S_1$ und $S_2$ verbindenden Achse z. Diese Achse fällt im Fall von rotationssymmetrischen Flächen 1 und 2 mit der optischen Achse des Brillenglases zusammen.

Ferner wird zur Vereinfachung im folgenden lediglich der Fall betrachtet, daß die Vorderfläche 1 und die augenseitige Fläche 2 des Brillenglases rotationssymmetrische Flächen sind.

Damit fällt - wie bereits erwähnt - die die beiden Glasscheitel $S_1$ und $S_2$ verbindende Achse z mit der optischen Achse des Brillenglases zusammen.

Ferner wird bei sämtlichen im folgenden vorgestellten Ausführungsbeispielen nur eine einzige Gradienten-erzeugende Fläche, nämlich die Fläche 4 verwendet, die zu Parallelflächen mit konstantem Brechungsindex $n(x,y,z) =$ const. führt, die die optische Achse augenseitig vom hinteren Glasscheitel $S_2$ schneiden. Die Gradienten-erzeugende Fläche 3 wird bei den gezeigten Ausführungsbeispielen nicht verwendet, um eine Variation des Brechungsindex auf der optischen Achse zwischen den Glasscheiteln zu erzeugen, so daß die Variation des Brechungsindex im wesentlichen nur zur Korrektur der Abbildungsfehler, nicht aber zur Reduzierung der Mittendicke $d_m$ bei Brillengläsern mit positiver Wirkung bzw. zur Reduzierung der Randdicke $d_r$ bei Brillengläsern mit negativer Wirkung beiträgt.

Eine Reduzierung der Mittendicke $d_m$ gegenüber heute üblichen sphärischen Brillengläsern bzw. gegenüber Brillengläsern, deren Begrenzungsflächen 1 und 2 entsprechend der sogenannten Tscherning'schen Regel gewählt sein können, wird stattdessen durch eine besondere Flächengestaltung erreicht, die - wie im folgenden gezeigt werden wird - ohne die erfindungsgemäße Variation des Brechungsindex und insbesondere bei konstantem Brechungsindex zu nicht akzeptablen Abbildungsfehlern führen würde.

Bei den im folgenden beschriebenen Ausführungsbeispielen handelt es sich bei den Beispielen 5 und 7 um Brillengläser mit positiver Wirkung und einem Scheitelbrechwert von +8 dpt, während die Beispiele 6 und 8 Brillengläser mit negativer Wirkung und einem Scheitelbrechwert von -10 dpt sind.

Die Beispiele 5 und 7 bzw. 6 und 8 unterscheiden sich dadurch, daß bei den Beispielen 5 und 6 die optisch nutzbare Zone gleich dem Gesamtdurchmesser des Brillenglases ist, während bei den Beispielen 7 und 8 die optisch nutzbare Zone kleiner als der Durchmesser des Brillenglases ist, so daß sich im Außenbereich ein "Tragrand" anschließt, wie er beispielsweise bei sogenannten Star-Gläsern gegenwärtig üblich ist.

Ausführungsbeispiel 5

Bei diesem Ausführungsbeispiel handelt es sich - wie bereits ausgeführt - um ein Glas mit positiver Brechkraft bzw. Wirkung, bei dem die Vorderfläche 1 (s. Fig. 1) eine konikoide Fläche (Kegelschnittfläche), deren Pfeilhöhe $\Delta z$ (= Abstand eines Punktes vom Flächenscheitel $S_1$ in Richtung der optischen Achse z) wiederum durch die Gleichung (3) gegeben ist. Dabei haben die einzelnen Größen folgende Werte:

$R_1$ = 54,7 mm

K = -4 55,

Die augenseitige Fläche 2 ist eine sphärische Fläche mit einem Radius $R_2$ = 175 mm.

Bei einem Durchmesser von 66 mm und einer Randdicke dr = 1,0 mm ergibt sich eine Mittendicke von 5,78 mm. Diese Mittendicke ist um ca. 33% kleiner als die Mittendicke gegenwärtig gefertigter sphärischer Gläser mit konstantem Brechungsindex (n = 1,6 und gleicher augenseitiger Fläche).

Bei einem konstantem Brechungsindex n = 1,60 hätte ein derartiges Glas eine sphärische Wirkung von + 8,0 dpt, jedoch nicht akzeptable Abbildungseigenschaften:

Fig. 9a zeigt den Verlauf des Refraktionsfehlers R und des Astigmatismus S in Dioptrie für ein derartiges Glas mit konstantem Brechungsindex als Funktion des Blickwinkels $\sigma'$. Dabei sind diese Fehler wiederum durch Gleichung (1) bzw. (2) definiert.

Wie Fig. 9a zu entnehmen ist, wurden sich bei einem augenseitigen Blickwinkel $\sigma$ von 30° Bildfehler in der Größenordnung von 3 dpt und darüber ergeben.

Fig. 9b zeigt den erfindungsgemäßen Verlauf des Brechungsindex längs der z-Achse, die bei dem gezeigten Ausführungsbeispiel mit der optischen Achse zusammenfällt. Dabei befindet sich der Nullpunkt im hinteren Flächenscheitel $S_2$. Die Flächen mit konstantem Brechungsindex sind Sphären, deren Symmetriezentrum SZ bei z = -70 mm liegt. Wie Fig. 9b zu entnehmen ist, ändert sich in einem Bereich entlang der und um die z-Achse der Brechungsindex lediglich im Bereich hinter, d.h. rechts (z>0) vom augenseitigen Glasscheitel $S_2$ (z = 0), d.h. die Variation des Brechungsindex trägt entsprechend den vorstehenden Ausführungen nur zur Korrektur der Abbildungsfehler bei. Die Eindringtiefe $d_s$ beträgt 10,2 mm.

Der in Fig. 9b dargestellte Verlauf des Brechungsindex kann beispielsweise dadurch erhalten werden, daß man einen mit einer Gradienten-erzeugenden Fläche 4 versehenen Rohling nacheinander unterschiedlichen Ionenaustauschbäder aussetzt. Gegebenenfalls kann man auch zwischen den einzelnen Ionenaustauschschritten die Gradienten-erzeugende Fläche abschleifen und durch eine andere Gradientenerzeigende Fläche, die bevorzugt eine Parallelfläche zu der ersten Gradienten-erzeugenden Fläche ist, ersetzen.

Durch die erfindungsgemäße Variation des Brechungsindex gemäß Fig. 9b ergibt sich der in Fig. 9c dargestellte Verlauf des Refraktionsfehlers $\Delta R$ und des Astigmatismus $\Delta S$. Wie Fig. 9c zu entnehmen ist, ist der Astigmatismus $\Delta S$ über den gesamten Blickwinkelbereich nahezu Null, während der Refraktionsfehler negative Werte hat, die erst bei einem Blickwinkel von 25° Werte von - 0,5 dpt erreichen. Dabei ist der negative Verlauf des Refraktionsfehlers physiologisch günstig.

Ausdrücklich soll darauf hingewiesen werden, daß durch die erfindungsgemäße Ausbildung nahezu beliebige Vorgaben für den Verlauf einer der beiden Abbildungsfehler eingehalten werden können. Insbesondere ist es möglich, auch andere Bedingungen einzuhalten, beispielsweise ein bestimmtes Verhältnis zwischen dem negative Werte annehmenden Refraktionsfehler und dem positive Werte annehmenden Astigmatismus einzuhalten.

Ferner ist darauf hinzuweisen, daß die Änderung des Brechungsindex mit ca. 0,2 Einheiten vergleichsweise klein ist, so daß sie mit derzeit bekannten Ionen-Austauschverfahren darstellbar ist.

Ausführungsbeispiel 6

Bei diesem Ausführungsbeispiel ist die augenseitige Fläche 2 eine konikoide Fläche (Kegelschnittfläche), deren Pfeilhöhe z (= Abstand eines Punktes vom Flächenscheitel $S_2$ in Richtung der z-Achse) durch Gleichung (4) gegeben ist. Dabei haben die einzelnen Größen folgende Werte:

$R_2$ = 43,75 mm

K = -6,92

Die Vorderfläche 1 ist eine sphärische Fläche mit einem Radius $R_1$ = 262,5 mm.

Im Gegensatz zu Gläsern mit Plus-Wirkung ist bei Gläsern mit Minus-Wirkung nicht die Mittendicke $d_m$, sondern die Randdicke $d_r$ die kritische Dicke.

Bei einem Durchmesser von 66 mm und einer Mittendicke $d_m$ = 1,0 mm ergibt sich eine Randdicke von 6,97 mm. Diese Randdicke ist um ca. 50% kleiner als die Randdicke gegenwärtig gefertigter sphärischer Gläser mit konstantem Brechungsindex (n = 1,525 und gleicher Vorderfläche 1).

Bei einem konstantem Brechungsindex n = 1,525 hätte ein derartiges Glas eine sphärische Wirkung $S'_o$ = -10,0 dpt, jedoch nicht akzeptable Abbildungseigenschaften:

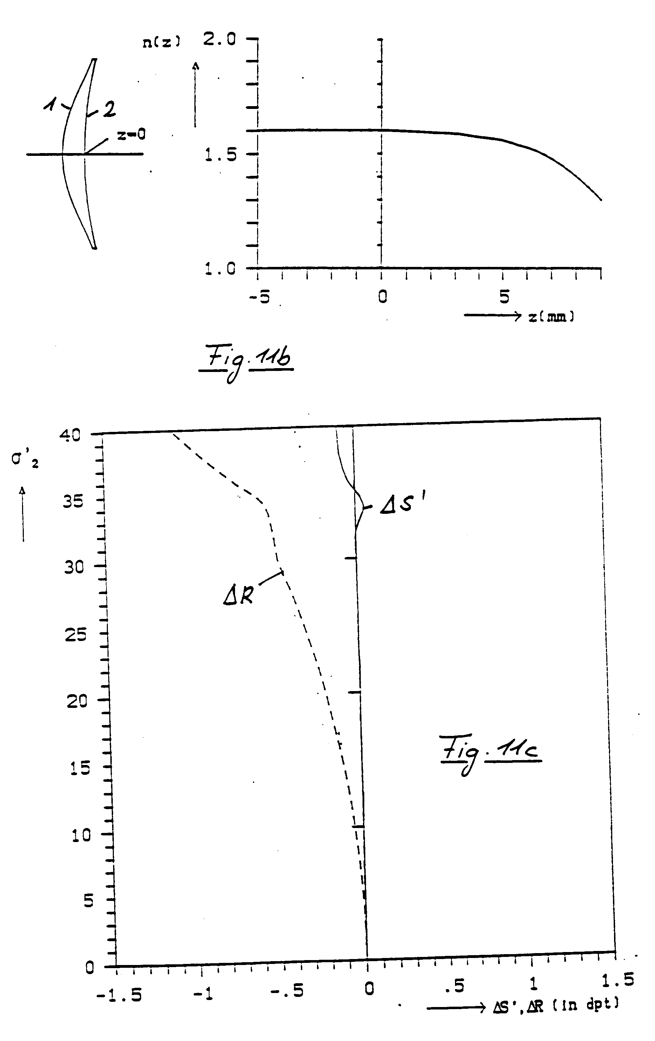

Fig. 10a zeigt den Verlauf des Refraktionsfehlers $\Delta R$ und des Astigmatismus $\Delta S$ in Dioptrien als Funktion des Blickwinkels $\sigma'$ für ein Brillenglas mit der oben angegebenen Flächengestaltung und konstantem Brechungsindex. Dabei sind diese Fehler wiederum durch die Gleichungen (1) und (2) definiert.

Wie Fig. 10a zu entnehmen ist, wurden sich bei einem Blickwinkel von 30° Bildfehler in der Größenordnung von 3 dpt und darüber ergeben.

Fig. 10b zeigt den Verlauf des Brechungsindex auf der optischen Achse. Dabei befindet sich der Nullpunkt im hinteren Flächenscheitel $S_2$. Die Flächen mit konstantem Brechungsindex sind sphärische Flächen, deren Symmetriezentrum SZ bei z = -200 mm liegt. Zwischen den Glasscheiteln $S_1$ und $S_2$ (z<0) ist der Brechungsindex auf der und um die optischen Achse herum wiederum konstant. Die Eindringtiefe $d_s$ des Gradienten beträgt 10,7 mm.

13

Hierdurch ergibt sich der in Fig. 10c dargestellte Verlauf des Refraktionsfehlers $\Delta R$ und des Astigmatismus $\Delta S$. Wie Fig. 10c zu entnehmen ist, ist der Astigmatismus $\Delta S$ über den gesamten Blickwinkelbereich nahezu Null, während der Refraktionsfehler geringfügig positive Werte hat, die erst bei einem Blickwinkel von 25° Werte von + 0,5 dpt erreichen.

Ausdrücklich soll darauf hingewiesen werden, daß durch die erfindungsgemäße Ausbildung wiederum nahezu beliebige Vorgaben für den Verlauf eines der beiden Abbildungsfehler eingehalten werden können. Insbesondere ist es möglich, auch andere Bedingungen einzuhalten, beispielsweise ein bestimmtes Verhältnis zwischen dem Refraktionsfehler und dem Astigmatismus einzuhalten.

Ausführungsbeispiel 7

In der linken Hälfte der Teilfigur 11b ist ein Linsenschnitt durch ein drittes Ausführungsbeispiel der Erfindung dargestellt, bei dem die verwendeten Bezugszeichen wiederum die gleiche Bedeutung wie in Fig. 1 haben, so daß auf eine erneute Vorstellung verzichtet wird.

Bei diesem Ausführungsbeispiel ist die Vorderfläche 1 eine konikoide Fläche (Kegelschnittfläche), die durch Zusatzglieder derart modifiziert ist, daß sich ein "Tragrand" ergibt. Bei dem gezeigten Ausführungsbeispiel ist die Pfeilhöhe $\Delta z$ (= Abstand eines Punktes vom Flächenscheitel $S_1$ in Richtung der z-Achse) gegeben ist durch:

$$\Delta z = Cr^2/(1 + (1-(K + 1)C^2r^2)^{1/2}) + a_4{}^*r^4 + a_6{}^*r^6$$

mit

| | |
|---|---|
| r: | Abstand des Punktes von der optischen Achse z |
| $C = 1/R_1$ mit $R_1$: | Krümmungsradius der Fläche im Scheitel $S_1$ |
| K: | Kegelschnittkoeffizient |
| $a_{4\ bzw.\ 6}$: | Koeffizienten der Zusatzterme |

Dabei haben die einzelnen Größen folgende Werte:

$R_1$ = 54,7 mm

K = -0,6

$a_4$ = -0,3 x $10^{-6}$

$a_6$ = -0,1612 x $10^{-8}$

Die augenseitige Fläche 2 ist eine sphärische Fläche mit einem Radius $R_2$ = 175 mm.

Bei einem Durchmesser von 66 mm und einer Randdicke dr = 1,0 mm ergibt sich eine Mittendicke von 5,80 mm. Diese Mittendicke ist um ca. 33% kleiner als die Mittendicke gegenwärtig gefertigter sphärischer Gläser mit konstantem Brechungsindex (n = 1,6 und gleicher augenseitiger Fläche).

Bei einem konstantem Brechungsindex n = 1,60 hätte ein derartiges Glas eine sphärische Wirkung von + 8,0 dpt, jedoch nicht akzeptable Abbildungseigenschaften:

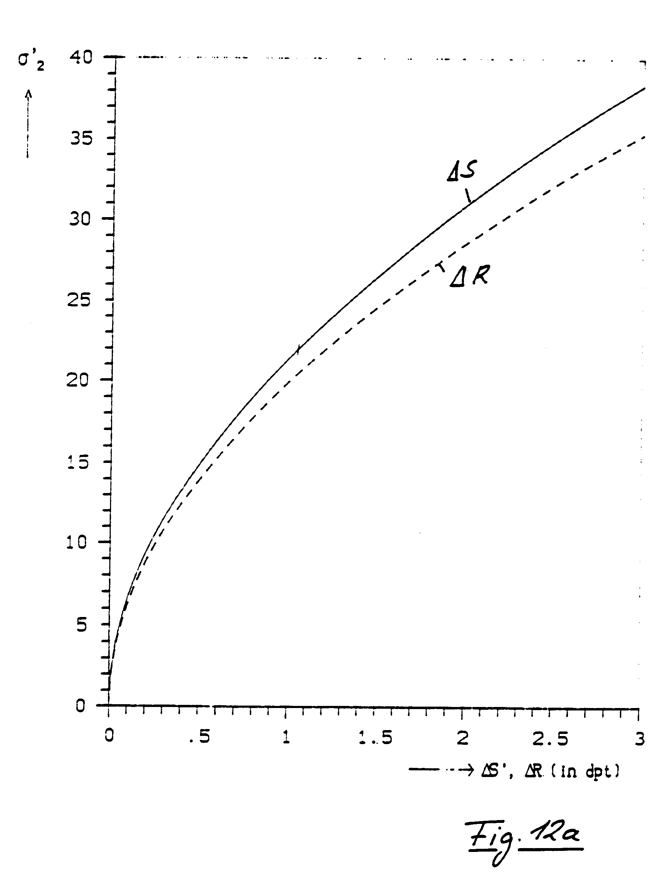

Fig. 11a zeigt den Verlauf des Refraktionsfehlers $\Delta R$ und des Astigmatismus $\Delta S$ in Dioptrien als Funktion des Blickwinkels $\sigma'$ für ein Brillenglas mit der oben angegebenen Flächengestaltung und konstantem Brechungsindex. Dabei sind diese Fehler wie beim Ausführungsbeispiel 1 definiert.

Wie Fig. 11a zu entnehmen ist, würden sich bei einem Blickwinkel von 30° Bildfehler in der Größenordnung von mehr als 1 dpt ergeben.

Fig. 11b zeigt in der rechten Hälfte den Verlauf des Brechungsindex auf der optischen Achse. Dabei befindet sich der Nullpunkt im hinteren Flächenscheitel $S_2$. Die Flächen mit konstantem Brechungsindex sind Sphären, deren Symmetriezentrum SZ bei z = -100mm liegt. Zwischen den Glasscheiteln $S_1$ und $S_2$ - (z<0) ist der Brechungsindex auf der und um die optischen Achse herum wiederum konstant. Die zur Korrektur des optisch wirksamen Bereichs bis $\sigma \approx 45°$ benötigte Eindringtiefe $d_s$ beträgt ca 5mm.

Hierdurch ergibt sich der in Fig. 11c dargestellte Verlauf des Refraktionsfehlers $\Delta R$ und des Astigmatismus $\Delta S$. Wie Fig. 11c zu entnehmen ist, ist der Astigmatismus $\Delta S$ über den gesamten Blickwinkelbereich nahezu Null, während der Refraktionsfehler geringfügig positive Werte hat, die erst bei einem Blickwinkel von 25° Werte von - 0,5 dpt erreichen.

Ausdrücklich soll darauf hingewiesen werden, daß durch die erfindungsgemäße Ausbildung wiederum nahezu beliebige Vorgaben für den Verlauf eines der beiden Abbildungsfehler eingehalten werden können. Insbesondere ist es möglich, auch andere Bedingungen einzuhalten, beispielsweise ein bestimmtes Verhältnis zwischen dem Refraktionsfehler und dem Astigmatismus einzuhalten.

Die Variation des Brechungsindex und dessen Eindringtiefe, die zur Korrektur der Abbildungsfehler erforderlich sind, ist aufgrund der Verwendung eines optisch nicht korrigierten Tragrandes noch geringer als bei dem fünften Ausführungsbeispiel, bei dem die Abbildungsfehler bis zum Rand korrigiert sind.

Ausführungsbeispiel 8

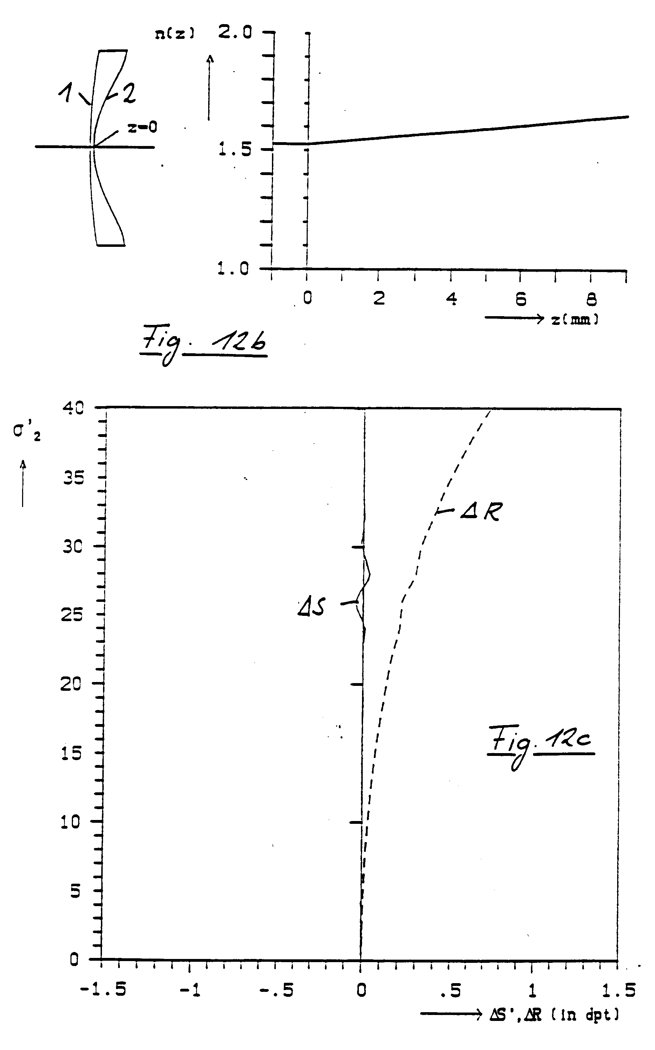

Fig. 12b zeigt in der linken Hälfte einen Linsenschnitt durch ein achtes Ausführungsbeispiel der Erfindung, bei dem die verwendeten Bezugszeichen die gleiche Bedeutung wie in Fig. 1 haben, so daß auf eine erneute Vorstellung verzichtet wird.

Bei diesem Ausführungsbeispiel ist die augenseitige Fläche 2 eine konikoide Fläche (Kegelschnittfläche), die durch Zusatzglieder derart modifiziert ist, daß sich ein "Tragrand" ergibt. Bei dem gezeigten Ausführungsbeispiel ist die Pfeilhöhe $\Delta z$ (= Abstand eines Punktes vom Flächenscheitel $S_2$ in Richtung der z-Achse) gegeben ist durch:

$$\Delta z = Cr^2/(1 + (1-(K+1)C^2r^2)^{1/2}) + a_4*r^4 + a_6*r^6$$

mit

| | |
|---|---|
| r: | Abstand des Punktes von der optischen Achse z |
| $C = 1/R_2$ mit $R_2$: | Krümmungsradius der Fläche im Scheitel $S_2$ |
| K: | Kegelschnittkoeffizient |
| $a_{4\ bzw.\ 6}$: | Koeffizienten der Zusatzglieder. |

Dabei haben die einzelnen Größen folgende Werte:

$R_2$ = 43,75

K = -0,5

$a_4$ = -1,5 x $10^{-6}$

$a_6$ = -0,283 x $10^{-8}$

Die Vorderfläche 1 ist eine sphärische Fläche mit einem Radius $R_1$ = 262,5 mm.

Bei einem Durchmesser von 66 mm und einer Mittendicke $d_m$ = 1,0 mm ergibt sich eine Randdicke von 6,97 mm. Diese Randdicke ist um ca. 50% kleiner als die Randdicke gegenwärtig gefertigter sphärischer Gläser mit konstantem Brechungsindex.

Bei einem konstantem Brechungsindex n = 1,525 hätte ein derartiges Glas eine sphärische Wirkung $S'_o$ = -10,0 dpt, jedoch nicht akzeptable Abbildungseigenschaften:

Fig. 12a zeigt den Verlauf des Refraktionsfehlers $\Delta R$ und des Astigmatismus $\Delta S$ in Dioptrien als Funktion des Blickwinkels $\sigma'$ für ein Brillenglas mit der oben angegebenen Flächengestaltung und konstantem Brechungsindex. Dabei sind diese Fehler durch die Gleichungen (1) und (2) definiert.

Wie Fig. 12a zu entnehmen ist, würden sich bei einem Blickwinkel von 30° Bildfehler in der Größenordnung von 2 dpt und darüber ergeben.

Fig. 12b zeigt in der rechten Hälfte den Verlauf des Brechungsindex auf der optischen Achse. Dabei befindet sich der Nullpunkt im hinteren Flächenscheitel $S_2$. Die Flächen mit konstantem Brechungsindex sind Sphären, deren Symmetriezentrum SZ bei z = -200 mm liegt. Zwischen den Glasscheiteln $S_1$ und $S_2$ (z<0) ist der Brechungsindex auf der und um die optischen Achse herum wiederum konstant. Die zur Korrektur des optisch wirksamen Bereichs bis $\sigma \approx 45°$ benötigte Eindringtiefe $d_s$ beträgt 6 mm.

Hierdurch ergibt sich der in Fig. 12c dargestellte Verlauf des Refraktionsfehlers $\Delta R$ und des Astigmatismus $\Delta S$. Wie Fig. 12c zu entnehmen ist, ist der Astigmatismus $\Delta S$ über den gesamten Blickwinkelbereich nahezu Null, während der Refraktionsfehler geringfügig positive Werte hat, die erst bei einem Blickwinkel von 25° Werte von + 0,5 dpt erreichen.

Ausdrücklich soll darauf hingewiesen werden, daß durch die erfindungsgemäße Ausbildung wiederum nahezu beliebige Vorgaben für den Verlauf eines der beiden Abbildungsfehler eingehalten werden können. Insbesondere ist es möglich, auch andere Bedingungen einzuhalten, beispielsweise ein bestimmtes Verhältnis zwischen dem Refraktionsfehler und dem Astigmatismus einzuhalten.

Die Variation des Brechungsindex und dessen Eindringtiefe, die zur Korrektur der Abbildungsfehler erforderlich sind, ist aufgrund der Verwendung eines optisch nicht korrigierten Tragrandes noch geringer als bei dem 2. Ausführungsbeispiel, bei dem die Abbildungsfehler bis zum Rand korrigiert sind.

Gradienten-erzeugende Flächen: (a)torische Flächen

Bei den bislang besprochenen Ausführungsbeispielen ist die erfindungsgemäße Variation des Brechungsindex zur Verringerung der Bildfehler von Einstärken-Gläsern bei speziell gewählter Flächengestaltung und/oder zur Reduktion der Mittendicke eingesetzt worden. Wie einleitend bereits ausgeführt worden ist, ist es jedoch auch möglich, den Gradienten zur Erzeugung einer astigmatischen und/oder progressiven Wirkung zu verwenden, wobei die Flächengestaltung zur astigmatischen und/oder progressiven Wirkung nichts oder nur teilweise beiträgt.

Ausführungsbeispiel 9

Exemplarisch für diese Verwendungsmöglichkeit der erfindungsgemäßen Variation des Brechungsindex soll deshalb im folgenden ein Beispiel erläutert werden, bei dem eine astigmatische Wirkung, d.h. eine Zylinderwirkung durch die Variation des Brechungsindex erzeugt wird. Dabei sind die Begrenzungsflächen 1 und 2 (siehe Fig. 1) des Brillenglases rotationssymmetrische Flächen und leisten damit keinen Anteil zu der astigmatischen Wirkung. Das Brillenglas soll dabei eine sphärische Wirkung von 4,00 dpt und eine Zylinderwirkung von 1,5 dpt mit einer Achse von 0° TABO (im folgenden ohne Beschränkung der Allgemeinheit mit "horizontal" bezeichnet) haben.

Das erfindungsgemäße Brillenglas mit astigmatischer Wirkung weist eine sphärische Vorderfläche 1 mit einem Radius $R_1$ = 76,8 mm und eine sphärische augenseitige Fläche 2 mit einem Radius $R_2$ = 175 mm. Bei einem Durchmesser von 66 mm und einer (konstanten) Randdicke von 1 mm hat das erfindungsgemäße Brillenglas damit eine Mittendicke von 5,3 mm.

Die Flächen konstanter Brechzahl sind Parallelflächen der im folgenden numerisch angegebenen Gradienten-erzeugenden Fläche 4, deren Scheitel die augenseitige Fläche 2 in deren Scheitel berührt. Der vertikale Meridianschnitt dieser Fläche ist der sog. kritische Schnitt und ist eine Kurve höherer Ordnung, der horizontale Meridianschnitt ist ein Kreis mit einem Radius von 175mm, d.h. mit dem gleichen Radius wie die augenseitige Fläche 2. Ausdrücklich soll darauf hingewiesen werden, daß in diesem Zusammenhang die Begriffe "vertikal" und "horizontal" lediglich zur Unterscheidung verwendet werden, und daß bei einer Benutzung des Brillenglases dieses entsprechend dem zu korrigierenden Augenastigmatismus vor dem Auge angeordnet werden kann. In der folgenden Tabelle 3 sind die Pfeilhöhen z (in mm) der Gradienten-erzeugenden Fläche 4 in Bezug auf das in Fig. 1 definierte Koordinatensystem angegebenen, dessen Nullpunkt bei diesem Ausführungsbeispiel mit dem Scheitel der Gradienten-erzeugenden Fläche zusammenfällt.

Tabelle 3

| y/x = | 0 | 4 | 8 | 12 | 16 | 20 |
|-------|-------|-------|-------|-------|-------|-------|
| 0 | 0,000 | 0,046 | 0,183 | 0,412 | 0,733 | 1,147 |
| 4 | 0,086 | 0,132 | 0,269 | 0,498 | 0,820 | 1,233 |
| 8 | 0,349 | 0,395 | 0,533 | 0,763 | 1,087 | 1,504 |
| 12 | 0,800 | 0,847 | 0,990 | 1,227 | 1,560 | 1,990 |
| 16 | 1,475 | 1,526 | 1,680 | 1,937 | 2,297 | 2,763 |
| 20 | 2,488 | 2,547 | 2,727 | 3,028 | 3,451 | 3,999 |

Als Optimierungsbedingung ist verwendet worden, daß im Vertikalschnitt sowohl der astigmatische Fehler als auch der Refraktionsfehler Null sind. Dabei ist der Refraktionsfehler $\Delta R$ als (mittlere Wirkung$_{ist}$ - mittlere Wirkung$_{soll}$) und der Astigmatismus $\Delta S$ als als Abweichung vom Rezeptwert(-Astigmatismus) definiert.

Die inhomogene Schicht, d.h. die Schicht innerhalb derer sich der Brechungsindex ändert, hat eine Dicke $d_s$ von 4.0 mm (vgl. Fig. 1), wobei der Brechungsindex entlang der Flächennormalen der Gradienten-erzeugenden Fläche von 1,825 parabelförmig auf 1,525 abnimmt.

Fig.13a zeigt den sich ergebenden Refraktionsfehler $\Delta R$ (gestrichelt) und den Astigmatismus $\Delta S$ (durchgezogene Linie) längs eines vertikalen Meridians, während Fig. 13b diese Größen langs eines horizontalen Meridians zeigt. Wie man sieht, kann entlang des (kritischen) vertikalen Meridians die Optimierungsbedingung für zwei Größen eingehalten werden, obwohl lediglich eine zu variierende Größe zur Verfügung steht. Auch längs des horizontalen Meridians ergeben sich lediglich geringe Bildfehler, obwohl die gesamte astigmatische Wirkung durch die Variation des Brechungsindex und nicht durch die Gestaltung der Flächen aufgebracht wird, die - wie vorstehend ausgeführt - rotationssymmetrische Flächen sind.

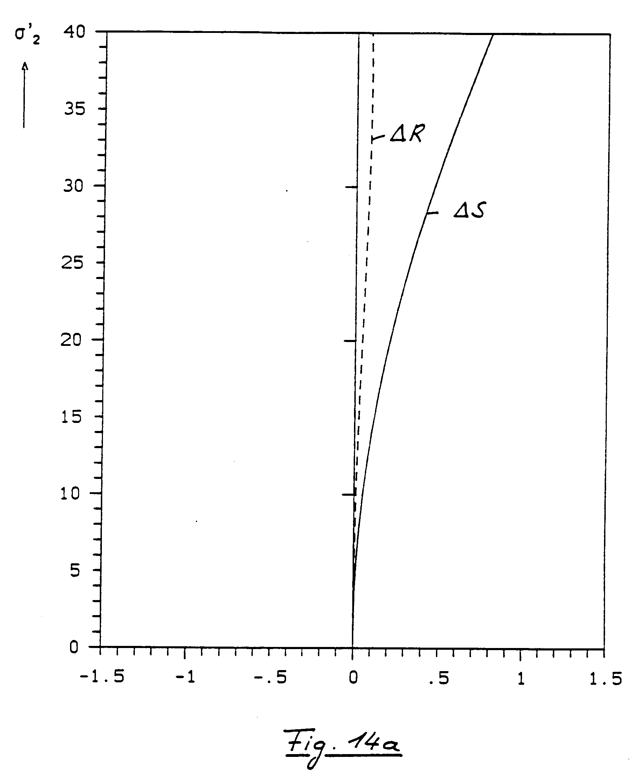

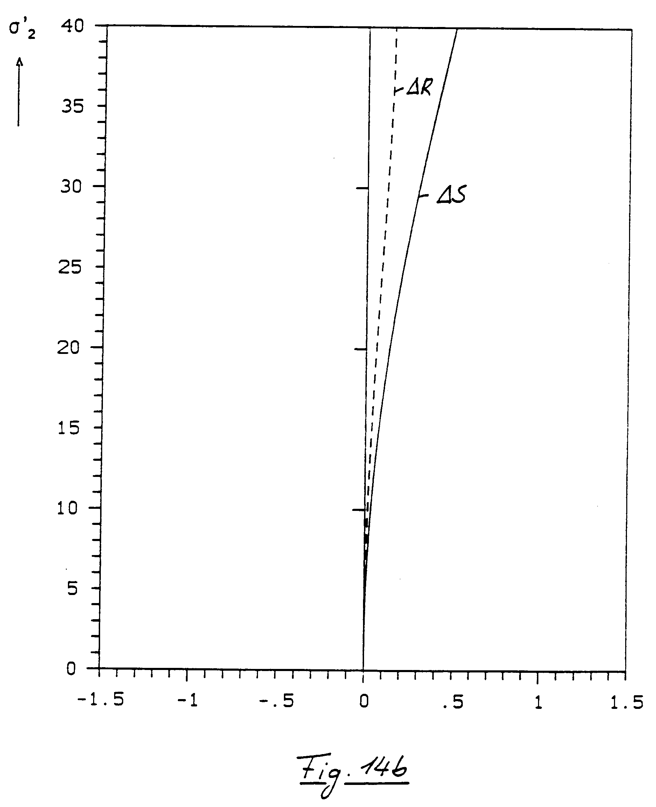

Die Fig. 14a und 14b zeigen die entsprechenden Größen für ein herkömmliches torisches Glas, das eine torische Vorderfläche mit einem horizontalen Radius von 77,4 mm und einem vertikalen Radius von 64,18 mm und eine gleiche Innenfläche wie das vorstehend exemplarisch gezeigte erfindungsgemäße Brillenglas aufweist. Bei einer konstanten Brechzahl n = 1,525 hat die Innenfläche damit einen Brechwert von -3 dpt. Die sphärische Wirkung dieses Glases beträgt damit 4,00 dpt, die Zylinderwirkung 1,5 dpt mit einer Achse von 0° TABO.

Bei einem Durchmesser von 66 mm und einer minimalen (vertikalen) Randdicke von 1,0 mm erreicht die Randdicke im horizontalen Schnitt einen Maximalwert von 2,7 mm. Die sich ergebende Mittendicke beträgt 7,0 mm.

Das erfindungsgemäße Glas hat damit bei mit herkömlichen Gläsern vergleichbaren Bildfehlern den Vorteil, daß die Randdicke konstant ist. Dies ist insbesondere beim Einsetzen des Brillenglases in modische randlose Fassungen von Vorteil. Darüberhinaus ist die Mittendicke um ca. 28% geringer. Ferner weist das erfindungsgemäße Glas eine geringere Scheiteltiefe als herkömliche Gläser mit einer torischen Flächengestaltung auf.

Vorstehend ist die Erfindung anhand von numerischen Ausführungsbeispielen ohne Beschränkung der Allgemeinheit beschrieben worden. Aufgrund der Darstellung von numerischen Ausführungsbeispielen ist ein auf dem einschlägigen Gebiet tätiger Fachmann in der Lage, dem jeweiligen Anwendungsfall angepaßte Ausführungsbeispiele sowohl für den Anwendungsfall, daß die Variation des Brechungsindex zur Reduzierung der kritischen Dicke verwendet werden soll, oder für den Anwendungsfall, daß die Variation des Brechungsindex zur Reduzierung der Abbildungsfehler dienen soll, als auch für die Kombination beider Anwendungsfälle zu berechnen. Entsprechende Rechenverfahren sind beispielsweise in der DE-OS 36 16 888 angegeben.

Zur Berechnung kann beispielsweise wie folgt vorgegangen werden:

Durch das Herstellverfahren für die Variation des Brechungsindex, also beispielsweise das für ein bestimmtes Glas-oder Kunststoffmaterial verwendete IonenaustauschVerfahren ist die Variation des Brechungsindex entlang der Oberflächennormale für die jeweils verwendete Gradientenerzeugende Fläche vorgegeben. Als "Freiheitsgrade" bei der Optimierung des Brillenglases stehen demnach zur Verfügung:

Die Gestaltung der beiden Begrenzungsflächen des Brillenglases, also der Vorderfläche 1 und der augenseitigen Fläche 2 sowie die Gestaltung der einen oder der beiden Gradienten-erzeugenden Flächen 3 bzw. 4.

Beispielsweise kann nun so vorgegangen werden, daß zunächst eine Gestaltung der Vorderfläche 1 und/oder der augenseitigen Fläche 2 ausgewählt wird, die zu der gewünschten Reduzierung der kritischen Dicke $d_m$ bzw. $d_r$ führt. Dabei können die Begrenzungsflächen ausschließlich unter dem Gesichtspunkt der Reduzierung der kritischen Dicke oder auch unter dem zusätzlichen Gesichtspunkt einer bereits mehr oder weniger großen Reduzierung der Abbildungsfehler gewählt werden. Hierzu wird beispielsweise auf die bekannte Flächengestaltung von asphärischen Brillengläsern mit reduzierter Mittendicke der Anmelderin der vorliegenden Anmeldung verwiesen.

Nachdem die Flächengestaltung der Begrenzungsflächen des späteren Brillenglases "in erster Näherung" festgelegt worden sind, optimiert man die sich ergebenden Bildfehler, also den astigmatischen Fehler und den Refraktionsfehler durch Variation der Gestaltung der Gradienten-erzeugenden Fläche 4.

Im Falle, daß die Gradienten-erzeugenden Flächen aus Herstellgründen auf sphärische Flächen beschränkt werden sollen, steht als Variationsparameter die Durchbiegung dieser Flächen, also die Größe $SZ_2$ zur Verfügung.

Dabei ist zu beachten, daß eine Verringerung der Durchbiegung, also eine Vergrößerung des Abstandes des objektseitigen Symmetriezentrums SZ vom Koordinatenursprung zu einer Verringerung der erforderlichen Eindringtiefe führt.

In vielen Fällen wird hierdurch bereits eine zufriedenstellende Korrektur der Abbildungsfehler bei Wahl einer flacheren Basiskurve zur Reduktion der Scheiteltiefe bzw. die beabsichtigte Verringerung der kritischen Dicke für einen bestimmten Scheitelbrechwert beispielsweise durch Erhöhen des Scheitelbrechwerts gegenüber einem Vergleichsglas mit konstantem Brechungsindex möglich sein.

Sollte bei vorgegebenem Gradientenverlauf durch Variation der Gradienten-erzeugenden Fläche 4 noch keine zufriedenstellende Korrektur der Abbildungsfehler möglich sein, so kann in einem nächsten Schritt die asphärische Fläche entsprechend variiert werden. Beispielsweise kann anstelle einer reinen Kegelschnitt-Fläche eine Kegelschnitt-Fläche verwendet werden, die durch Glieder höherer Ordnung "modifiziert" ist.

In der Regel ist spätestens dieser "Iterationsschritt" ausreichend, um ein Brillenglas gemäß vorgegebenen Eigenschaften zu erhalten.

Die vorstehende Beschreibung ist eine exemplarische Darstellung einer möglichen Vorgehensweise. Selbstverständlich kann bei der Berechnung von erfindungsgemäßen Brillengläsern hiervon abgewichen werden. Beispielsweise ist es möglich, anstelle von sphärischen Gradienten-erzeugenden Flächen deren Durchbiegung variiert wird, asphärische Flächen zu verwenden, oder anders bei der Iteration zwischen der Variation der Begrenzungsflächen des Brillenglases und der Variation der Gestaltung der Gradienten-erzeugenden Flächen vorzugehen.

In jedem Falle ist es jedoch möglich, aufgrund der erfindungsgemäßen Ausbildung nicht nur Brillengläser mit konstantem Brechwert oder Brillengläser mit astigmatischer Wirkung, sondern auch Brillengläser progressiver sowie gegebenenfalls zusätzlicher astigmatischer Wirkung zu realisiern, die ganz oder teilweise durch die Variation des Brechungsindex aufgebracht wird, oder bei denen die Korrektur der Abbildungsfehler ganz oder teilweise durch die Variation des Brechungsindex erfolgt, wobei die jeweils erforderliche Variation des Brechungsindex durch das erfindungsgemäße Konzept von Gradienten-erzeugenden Flächen in Verbindung mit an sich bekannten Herstellverfahren erreicht werden kann.

Weiterhin läßt sich der im Anspruch 1 niedergelegte allgemeine Erfindungsgedanke auf Gläser aus beliebigen Materialien und mit beliebiger Flächengestaltung anwenden. So ist es nicht erforderlich, daß die "Ausgangs"-Brechzahl den Wert 1,525 hat. Je nach Ausgangsmaterial kann die Brechzahl selbstverständlich niedriger - beispielsweise 1,5 bei bestimmten Kunststoffmaterialien - oder höher sein und beispielsweise Werte von 1,6 oder 1,7 (typische Werte von hochbrechenden Gläsern und Kunststoffmaterialien) haben. Auch ist es nicht erforderlich, daß als asphärische Fläche eine Kegelschnittfläche verwendet wird. Selbstverständlich können auch kompliziertere asphärische Flächen verwendet werden, die insbesondere auch bereits durch die Flächengestaltung zur Korrektur der Bildfehler beitragen. Ferner können auch beide Flächen als asphärische Flächen ausgebildet sein und/oder die Vorderfläche eine Zylinderwirkung aufweisen.

Ferner ist es selbstverständlich nicht erforderlich, daß immer die Korrekturbedingung "Astigmatismus über den Blickwinkelbereich angenähert = 0" eingehalten wird. Je nach Anwendungsfall oder Vorgabe können auch andere Korrekturbedingungen, beispielsweise die Bedingung "Absolutwert des Refraktionsfehlers/Absolutwert Astigmatismus = 2:1" eingehalten werden.

In jedem Fall gilt aber die erfindungsgemäße Lehre, daß die Brechzahl zunehmen muß, wenn der zu korrigierende Fehler zu große positive Werte hat, bzw. abnehmen muß, wenn der zu korrigierende Fehler (Astigmatismus oder Refraktionsfehler) "zu große" negative Werte aufweist.

**Patentansprüche**

1.  Brillenglas mit einer vorderen (1) und einer augenseitigen Begrenzungsfläche (2) sowie mit einem sich ändernden Brechungsindex, der zur Korrektur der Abbildungsfehler beiträgt,
    **gekennzeichnet** durch wenigstens eine Schar von in Blickrichtung aufeinanderfolgenden Niveauflächen, die jeweils durch einen konstanten Brechungsindex, $n(x,y,z) = $ const., definiert sind, wobei sich der Brechungsindex benachbarter Flächen voneinander unterscheidet und diese Niveauflächen in Richtung ihrer Flächennormalen in allen Punkten jeweils gleichen Abstand zueinander haben, also sogenannte Parallelflächen sind, und die bzw. deren analytische Verlängerung die Achse (z), die die Glasscheitel $(S_1, S_2)$ der Vorderfläche (1) und der augenseitigen Fläche (2) verbindet, in einem Abstand A von dem nächstgelegenen Glasscheitel schneiden, für den gilt:

    $$A \leq 20 * L_{n(x,y,z)=const.}$$

    hierbei ist $L_{n(x,y,z)=const.}$ die Länge der Grenzlinie (3',4') in einem Linsenschnitt zwischen dem Gebiet mit im wesentlichen konstantem Brechungsindex und dem Gebiet mit sich änderndem Brechungsindex.

2.  Brillenglas nach Anspruch 1,
    dadurch **gekennzeichnet**, daß die Niveauflächen-Scharen die Achse (z) senkrecht schneiden.

3.  Brillenglas nach Anspruch 1 oder 2,
    dadurch **gekennzeichnet**, daß die Niveauflächen-Scharen Parallelflächen zu torischen oder atorischen Flächen sind.

4.  Brillenglas nach Anspruch 1 oder 2,
    dadurch **gekennzeichnet**, daß die Niveauflächen-Scharen Parallelflächen zu einer Fläche mit einer Form ähnlich der Form der zum Brechwertanstieg beitragenden Flächen von progressiven Brillengläsern sind.

5.  Brillenglas nach Anspruch 1 oder 2,
    dadurch **gekennzeichnet**, daß die Niveauflächen rotationssymmetrische Flächen sind, die im Meridianschnitt jeweils eine gemeinsame Evolute haben.

6.  Brillenglas nach Anspruch 5,
    dadurch **gekennzeichnet**, daß die rotationssymmetrischen Niveauflächen sphärische Flächen sind.

EP 0 347 917 B1

**7.** Brillenglas nach Anspruch 6,
dadurch **gekennzeichnet**, daß die Niveauflächen Ebenen sind.

**8.** Brillenglas nach Anspruch 7,
dadurch **gekennzeichnet**, daß zur Korrektur der Abbildungsfehler lediglich die Änderung des Brechungsindex für $z \geq 0$ dient, wobei $z = 0$ der Scheitel ($S_2$) der augensaitigen Fläche (2) ist.

**9.** Brillenglas nach Anspruch 8,
dadurch **gekennzeichnet**, daß zur Korrektur des Astigmatismus und/oder des Refraktionsfehlers der Brechungsindex für $z \geq 0$ zunimmt, wenn die Astigmatismus- bzw. Refraktionsfehlerwerte bei gleicher Flächengestaltung und konstantem Brechungsindex positiv sind, und abnimmt, wenn die Astigmatismus- bzw. Refraktionsfehlerwerte negativ sind.

**10.** Brillenglas nach einem der Ansprüche 1 bis 6,
dadurch **gekennzeichnet**, daß zur Korrektur der Abbildungsfehler die Niveauflächen mit jeweils konstantem Brechungsindex die Verbindungsachse ($z$) außerhalb der beiden Scheitel des Brillenglases durchsatzen.

**11.** Brillenglas nach einem der Ansprüche 5, 6, 9 oder 10,
dadurch **gekennzeichnet**, daß der Ausgangspunkt der Evolute für die Niveauflächen, $n(x,y,z) = \text{const.}$, mit konstantem Brechungsindex im Objektraum liegt.

**12.** Brillenglas nach einem der Ansprüche 5, 6 oder 9 bis 11,
dadurch **gekennzeichnet**, daß der Brechungsindex bildseitig zur Korrektur eines positiver Astigmatismuswertes, i.e. meridionaler Brechwert - sagittaler Brechwert, und/oder eines positiven Refraktionsfehlers zunimmt bzw. zur Korrektur eines negativer Astigmatismuswertes bzw. Refraktionsfehlers abnimmt.

**13.** Brillenglas nach einem der Ansprüche 1 bis 12,
dadurch **gekennzeichnet**, daß der Verlauf der beiden Begrenzungsflächen (1,2) derart gewählt ist, daß die kritische Dicke ($d_m$ bzw. $d_r$) des Brillenglases einen vorgegebenen Wert nicht übersteigt.

**14.** Brillenglas nach einem der Ansprüche 1 bis 13,
dadurch **gekennzeichnet**, daß sich zur Verringerung der sog. Scheiteltiefer des Glases der Brechungsindex auf der Verbindungsachse der Scheitel ($S_1$, $S_2$) des Brillenglases ändert.

**15.** Brillenglas nach einem der Ansprüche 1 bis 14,
dadurch **gekennzeichnet**, daß wenigstens eine der Begrenzungsflächen (1,2) eine asphärische Fläche ist.

**16.** Brillenglas nach einem der Ansprüche 1 bis 15,
dadurch **gekennzeichnet**, daß die Begrenzungsflächen rotationssymmetrische Flächen sind, so daß die die Glasscheitel ($S_1$, $S_2$) verbindende Achse ($z$) die optische Achse ist.

**17.** Brillenglas nach einem der Ansprüche 1 bis 16,
dadurch **gekennzeichnet**, daß sich zur Reduzierung der kritischen Dicke des Brillenglases der Brechungsindex auf der optischen Achse zwischen dem Scheitel $S_1$ ($z = -d_m$) der Vorderfläche und dem Scheitel $S_2$ ($z = 0$) der augenseitigen Fläche derart ändert, daß er auf der Seite der stärker gekrümmten Fläche seinen größten Wert hat.

**18.** Brillenglas mit Plus-Wirkung nach einem der Ansprüche 15 bis 17,
dadurch **gekennzeichnet**, daß die asphärische Fläche die Vorderfläche (1) ist.

**19.** Brillenglas mit Minus-Wirkung nach einem der Ansprüche 15 bis 17,
dadurch **gekennzeichnet**, daß die asphärische Fläche die augenseitige Fläche (2) ist.

**20.** Brillenglas nach einem der Ansprüche 1 bis 19,
dadurch **gekennzeichnet**, daß der Brechungsindex in einem begrenzten Bereich um die optische Achse einen konstanten Wert hat.

19

**21.** Brillenglas nach einem der Ansprüche 1 bis 19,
dadurch **gekennzeichnet**, daß der Randbereich des Glases als optisch nicht korrigierender Tragrand ausgebildet ist.

**22.** Brillenglas-Serie, bei der eine Begrenzungsfläche zur Überdeckung eines bestimmten Wirkungsbereichs mit einer gewissen Zahl von sog. Basiskurven von abgestufter Scheitelkrümmung verfügbar ist, und die Scheitelkrümmung der anderen Fläche innerhalb eines bestimmten Bereichs zur Erzielung der sog. Rezeptwirkung gewählt wird, nach einem der Ansprüche 1 bis 21,
dadurch **gekennzeichnet**, daß die Brechungsindexvariation im jeweiligen Wirkungsbereich unabhängig von der Scheitelkrümmung der anderen Fläche ist.

**23.** Brillenglas-Serie nach Anspruch 22,
dadurch **gekennzeichnet**, daß die Brechungsindexvariation wenigstens für einige der Basiskurven gleich ist.

**Claims**

**1.** Spectacle lens with a front boundary surface (1) and a boundary surface on the eye side (2) as well as with a varying refractive index which contributes to the correction of image defects, characterised by at least one family of equipotential surfaces which succeed each other in the direction of viewing and which are in each case defined by a constant refractive index, $n(x,y,z) = $ const., wherein the refractive index of adjacent surfaces differs from each other and these equipotential surfaces are in each case the same distance apart at all points in the direction of their surface normal, and are therefore so-called parallel surfaces, and the or their analytical extension intersects with the axis (z) which connects the lens vertices ($S_1$, $S_2$) of the front surface (1) and surface on the eye side (2), at a distance A from the closest lens vertex, for which the following holds true:

$$A \leq 20 * L_{n(x,y,z)=\text{const.}}$$

where $L_{n(x,y,z)=\text{const.}}$ is the length of the boundary line (3',4') in a lens section between the area with an essentially constant refractive index and the area with a varying refractive index.

**2.** Spectacle lens according to claim 1, characterised in that the families of equipotential surfaces intersect with the axis (z) perpendicularly.

**3.** Spectacle lens according to claim 1 or 2, characterised in that the families of equipotential surfaces are parallel surfaces to toric or atoric surfaces.

**4.** Spectacle lens according to claim 1 or 2, characterised in that the families of equipotential surfaces are parallel surfaces to a surface with a shape similar to the shape of the surfaces of progressive spectacle lenses contributing to an increase in power.

**5.** Spectacle lens according to claim 1 or 2, characterised in that the families of equipotential surfaces are rotationally symmetrical surfaces which in the meridian section in each case have a common evolute.

**6.** Spectacle lens according to claim 5, characterised in that the rotationally symmetrical equipotential surfaces are spherical surfaces.

**7.** Spectacle lens according to claim 6, characterised in that the equipotential surfaces are planes.

**8.** Spectacle lens according to claim 7, characterised in that only the variation in refractive index where $z \geq 0$ is used to correct the image defects, wherein $z = 0$ is the vertex ($S_2$) of the surface on the eye side (2).

**9.** Spectacle lens according to claim 8, characterised in that to correct the astigmatism and/or the refraction error the refractive index where $z \geq 0$ increases if the astigmatism or refraction error values are positive with the same surface shape and a constant refractive index, and decreases if the astigmatism or refraction error values are negative.

10. Spectacle lens according to any of claims 1 to 6, characterised in that to correct the image defects the equipotential surfaces each with a constant refractive index pass through the connecting axis (z) outside of the two vertices of the spectacle lens.

11. Spectacle lens according to any of claims 5, 6, 9 or 10, characterised in that the origin of the evolute for the equipotential surfaces, $n(x,y,z) = const.$, with a constant refractive index is located in the object space.

12. Spectacle lens according to any of claims 5, 6 or 9 to 11, characterised in that the refractive index on the image side increases to correct a positive astigmatism value, i.e. meridional power - sagittal power, and/or a positive refraction error, and decreases to correct a negative astigmatism value or refraction error.

13. Spectacle lens according to any of claims 1 to 12, characterised in that the progression of the two boundary surfaces (1, 2) is selected in such a way that the critical thickness ($d_m$ or $d_r$) of the spectacle lens does not exceed a given value.

14. Spectacle lens according to any of claims 1 to 13, characterised in that to reduce the so-called vertex depth of the lens, the refractive index varies on the connecting axis of the vertices ($S_1$, $S_2$) of the spectacle lens.

15. Spectacle lens according to any of claims 1 to 14, characterised in that at least one of the boundary surfaces (1, 2) is an aspherical surface.

16. Spectacle lens according to any of claims 1 to 15, characterised in that the boundary surfaces are rotationally symmetrical surfaces, so that the axis (z) connecting the lens vertices ($S_1$, $S_2$) is the optical axis.

17. Spectacle lens according to any of claims 1 to 16, characterised in that to reduce the critical thickness of the spectacle lens, the refractive index varies on the optical axis between the vertex $S_1$ ($z = -d_m$) of the front surface and the vertex $S_2$ ($z = 0$) of the surface on the eye side, in such a way that it has its maximum value on the side of the more highly curved surface.

18. Spectacle lens with positive power according to any of claims 15 to 17, characterised in that the aspherical surface is the front surface (1).

19. Spectacle lens with negative power according to any of claims 15 to 17, characterised in that the aspherical surface is the surface on the eye side (2).

20. Spectacle lens according to any of claims 1 to 19, characterised in that the refractive index has a constant value in a limited region around the optical axis.

21. Spectacle lens according to any of claims 1 to 19, characterised in that the edge region of the lens is constructed as an optically uncorrected supporting edge.

22. Spectacle lens series, in which one boundary surface is available for overlapping a given range of power with a certain number of so-called base curves of graduated vertex curvature, and the vertex curvature of the other surface is selected within a given range to obtain the so-called formula power, according to any of claims 1 to 21, characterised in that the variation in refractive index in the respective range of power is independent of the vertex curvature of the other surface.

23. Spectacle lens series according to claim 22, characterised in that the variation in refractive index is the same at least for some of the base curves.

**Revendications**

1.  Verre ophtalmique avec une face antérieure (1) et une face postérieure (2) ainsi qu'avec un indice de réfraction variable qui contribue à la correction des aberrations, caractérisé par au moins une famille de surfaces de niveau se succédant dans la direction du regard qui sont définies dans chaque cas par un indice de réfraction constant, n(x,y,z) = cte, moyennant quoi l'indice de réfraction de surfaces contiguës diffère et ces surfaces de niveau présentent entre elles, en tous points, un même intervalle dans le sens de leur normale à la surface, sont par conséquent des surfaces dites parallèles et la ou leur prolongement analytique coupe l'axe (z) qui relie les sommets (S1,S2) de la face antérieure (1) et de la face postérieure (2) à une distance A du sommet de verre le plus proche, pour laquelle on a

$A \leqq 20 * Ln (x,y,z) = cte$

où Ln (x,y,z) = cte est la longueur de la ligne de séparation (3',4') dans une section de lentille entre la zone à indice de réfraction pratiquement constant et la zone à indice de réfraction variable.

2. Verre ophtalmique selon la revendication 1, caractérisé en ce que les familles de surfaces de niveau coupent perpendiculairement l'axe (z).

3. Verre ophtalmique selon la revendication 1 ou 2, caractérisé en ce que les familles de surfaces de niveau sont des surfaces parallèles à des surfaces toriques ou atoriques.

4. Verre ophtalmique selon la revendication 1 ou 2, caractérisé en ce que les familles de surfaces de niveau sont des surfaces parallèles à une surface ayant une forme semblable à la forme des surfaces de verres ophtalmiques progressifs contribuant à l'accroissement de la convergence.

5. Verre ophtalmique selon la revendication 1 ou 2, caractérisé en ce que les surfaces de niveau sont des surfaces à symétrie de révolution qui possèdent une développée commune dans la section méridienne.

6. Verre ophtalmique selon la revendication 6, caractérisé en ce que les surfaces de niveau à symétrie de révolution sont des surfaces sphériques.

7. Verre ophtalmique selon la revendication 6, caractérisé en ce que les surfaces de niveau sont des plans.

8. Verre ophtalmique selon la revendication 7, caractérisé en ce que seule la variation de l'indice de réfraction pour $z \geq 0$ sert à la correction des aberrations, $z = 0$ étant le sommet ($S_2$) de la face postérieure (2).

9. Verre ophtalmique selon la revendication 8, caractérisé en ce que, pour la correction de l'astigmatisme et/ou du défaut de réfraction, l'indice de réfraction pour $z \geq 0$ augmente lorsque les valeurs d'astigmatisme ou de défaut de réfraction pour une conformation de surface identique et un indice de réfraction constant sont positives et diminue lorsque les valeurs d'astigmatisme ou de défaut de réfraction sont négatives.

10. Verre ophtalmique selon une des revendications 1 à 6, caractérisé en ce que, pour la correction des aberrations, les surfaces de niveau ayant chaque fois un indice de réfraction constant traversent la ligne de jonction (z) en dehors des deux sommets du verre ophtalmique.

11. Verre ophtalmique selon l'une des revendications 5, 6, 9 ou 10, caractérisé en ce que le point de départ de la développée pour les surfaces de niveau, n(x,y,z) = cte, avec un indice de réfraction constant se situe dans l'espace objet.

12. Verre ophtalmique selon l'une des revendications 5, 6 ou 9 à 11, caractérisé en ce que l'indice de réfraction du côté image augmente pour la correction d'une valeur d'astigmatisme positive, à savoir convergence tangentielle - convergence sagittale, et/ou d'un défaut de réfraction positif ou diminue pour la correction d'une valeur d'astigmatisme ou de défaut de réfraction négative.

13. Verre ophtalmique selon l'une des revendications 2 à 12, caractérisé en ce que l'allure des deux surfaces (1,2) est choisie de telle manière que l'épaisseur critique ($d_m$,respect.$d_r$) du verre ophtalmique ne dépasse pas une valeur prédéterminée.

**14.** Verre ophtalmique selon l'une des revendications 1 à 13, caractérisé en ce que, pour la réduction de ce que l'on appelle la profondeur au sommet du verre, l'indice de réfraction varie sur la ligne de jonction des sommets ($S_1$,$S_2$) du verre ophtalmique.

**15.** Verre ophtalmique selon l'une des revendications 1 à 14, caractérisé en ce qu'au moins une des surfaces (1, 2) est une surface asphérique.

**16.** Verre ophtalmique selon l'une des revendications 1 à 15, caractérisé en ce que les surfaces sont des surfaces à symétrie de révolution de sorte que l'axe reliant les sommets du verre ($S_1$, $S_2$) est l'axe optique.

**17.** Verre ophtalmique selon l'une des revendications 1 à 16, caractérisé en ce que, pour la réduction de l'épaisseur critique du verre ophtalmique, l'indice de réfraction sur l'axe optique entre le sommet $S_1$-($z = -d_m$) de la face antérieure et le sommet $S_2$ ($z = 0$) de la face postérieure varie de telle façon qu'il possède sa valeur maximale du côté de la face plus fortement incurvée.

**18.** Verre ophtalmique à effet positif selon l'une des revendications 15 à 17, caractérisé en ce que la face asphérique est la face antérieure (1).

**19.** Verre ophtalmique à effet négatif selon l'une des revendications 15 à 17, caractérisé en ce que la face asphérique est la face postérieure (2).

**20.** Verre ophtalmique selon l'une des revendications 1 à 19, caractérisé en ce que l'indice de réfraction possède une valeur constante dans une zone limitée autour de l'axe optique.

**21.** Verre ophtalmique selon l'une des revendications 1 à 19, caractérisé en ce que la zone marginale du verre se présente sous la forme d'une facette optiquement non correctrice.

**22.** Série de verres ophtalmiques, dans laquelle une face pour le recouvrement d'une zone utile déterminée à l'aide d'un certain nombre de courbes dites "de base" à courbure au sommet échelonnée est disponible et dans laquelle la courbure au sommet de l'autre face est choisie à l'intérieur d'une zone déterminée pour l'obtention de l'effet prescrit selon l'une des revendications 1 à 21, caractérisée en ce que la variation d'indice de réfraction dans la zone utile concernée est indépendante de la courbure au sommet de l'autre face.

**23.** Série de verres ophtalmiques selon la revendication 22, caractérisée en ce que la variation d'indice de réfraction est identique pour au moins quelques-unes des courbes de base.

Fig. 1

Fig. 2a

Fig. 2b

Fig. 3a

$\Delta n = n(d_s) - n_o$

Fig. 3b

Fig. 4a

EP 0 347 917 B1

Fig. 4c

--- Refraktionsfehler     Astigmatismus —

-1.5 dpt  -1 dpt  -.5     0     .5 dpt  1 dpt  1.5

Fig. 4b

n(z)

1.65
1.60
1.55
1.50

-10 -9 -8 -7 -6 -5 -4 -3 -2 -1 0 1 2 3

Z (mm)

28

*Fig. 5a*

Fig.5c

Refraktionsfehler - - -   Astigmatismus —

Fig.5b

Fig. 6a

Refraktionsfehler --- Astigmatismus —

Fig. 6b

Fig. 7

Fig. 8a

Refraktionsfehler ---     Astigmatismus —

Fig. 8c

Fig. 8b

$\rightarrow$ Z (mm)

Fig. 9a

Fig. 9c

Fig. 9b

Fig. 10e

Fig. 10c

Fig. 10b

Fig. 11a

EP 0 347 917 B1

Fig. 11b

Fig. 11c

40

Fig. 12a

Fig. 12b

Fig. 12c

Fig. 13a

Fig. 13b

Fig. 14a

Fig. 146